(19) Europäisches Patentamt / European Patent Office / Office européen des brevets

(11) **EP 4 219 262 B1**

(12) **EUROPEAN PATENT SPECIFICATION**

(45) Date of publication and mention
of the grant of the patent:
**18.09.2024 Bulletin 2024/38**

(21) Application number: **22154074.3**

(22) Date of filing: **28.01.2022**

(51) International Patent Classification (IPC):
**B60W 60/00** (2020.01)

(52) Cooperative Patent Classification (CPC):
**B60W 60/0015; B60W 2556/20**

(54) **IN-VEHICLE SYSTEM FOR ESTIMATION OF RISK EXPOSURE FOR AN AUTONOMOUS VEHICLE**

FAHRZEUGINTERNES SYSTEM ZUR SCHÄTZUNG DER RISIKOEXPOSITION FÜR EIN AUTONOMES FAHRZEUG

SYSTÈME EMBARQUÉ D'ESTIMATION DE L'EXPOSITION AU RISQUE POUR UN VÉHICULE AUTONOME

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**02.08.2023 Bulletin 2023/31**

(73) Proprietor: **Zenseact AB**
**417 56 Göteborg (SE)**

(72) Inventors:
• **GYLLENHAMMAR, Magnus**
**435 43 Pixbo (SE)**
• **ZANDÉN, Carl**
**437 38 Lindome (SE)**
• **KHORSAND VAKILZADEH, Majid**
**431 66 Mölndal (SE)**

(74) Representative: **Zacco Sweden AB**
**P.O. Box 5581**
**Löjtnantsgatan 21**
**114 85 Stockholm (SE)**

(56) References cited:
EP-A1- 3 895 950          EP-A1- 3 940 487
DE-A1- 102012 009 297     DE-A1- 102020 109 662
US-A1- 2019 354 643

• **WARG FREDRIK ET AL: "The Quantitative Risk Norm - A Proposed Tailoring of HARA for ADS", 2020 50TH ANNUAL IEEE/IFIP INTERNATIONAL CONFERENCE ON DEPENDABLE SYSTEMS AND NETWORKS WORKSHOPS (DSN-W), IEEE, 29 June 2020 (2020-06-29), pages 86 - 93, XP033800403, DOI: 10.1109/DSN-W50199.2020.00026**

**Description**

TECHNICAL FIELD

The present invention relates to automated driving systems, and in particular to risk estimation for vehicles equipped with an automated driving system.

BACKGROUND

During these last few years, the development of autonomous vehicles has exploded and many different solutions are being explored. An increasing number of modern vehicles have advanced driver-assistance systems (ADAS) to increase vehicle safety and more generally road safety. ADAS - which for instance may be represented by adaptive cruise control, ACC, collision avoidance system, forward collision warning, etc. - are electronic systems that may aid a vehicle driver while driving. Today, development is ongoing in both ADAS as well as Autonomous Driving (AD), within a number of different technical areas within these fields. ADAS and AD will herein be referred to under the common term Automated Driving System (ADS) corresponding to all of the different levels of automation as for example defined by the SAE J3016 levels (0 - 5) of driving automation.

Accordingly, in a not too distant future, ADS solutions will to a greater extent find their way into modern vehicles. An ADS may be construed as a complex combination of various components that can be defined as systems where perception, decision making, and operation of the vehicle are performed by electronics and machinery instead of a human driver, and as introduction of automation into road traffic. This includes handling of the vehicle, destination, as well as awareness of surroundings. While the automated system has control over the vehicle, it allows the human operator to leave all or at least some responsibilities to the system. An ADS commonly combines a variety of sensors to perceive the vehicle's surroundings, such as e.g. radar, LIDAR, sonar, camera, navigation system e.g. GPS, odometer and/or inertial measurement units (IMUs), upon which advanced control systems may interpret sensory information to identify appropriate navigation paths, as well as obstacles and/or relevant signage.

ADS features as described above are, however, bound to be required to function with a high integrity to provide sufficiently low risk for the vehicle occupant(s) as well as their surrounding environments. Ensuring that the risk is sufficiently low may require intractable amounts of data for statistical proofs, and would, according to an example, take e.g. approximately a hundred vehicles to drive continuously for five centuries, to acquire. There are several approaches to minimize the risk of the ADS features before they are launched onto public roads. However, on top of this, it is generally believed that the ADS features should be monitored once in the field, in order to ensure that they adhere to required safety levels.

Moreover, in many cases the safety risks that the ADS will face are from situations that are not within the limits of traffic rules or even conventional driving scenarios, but rather what is called corner cases or edge cases. These cases could include VRUs (vulnerable road users) appearing either on the perception boarder or from an occluded state around the ADS. Other cases include very aggressive driving from nearby traffic participants or adverse weather or road conditions.

Accordingly, assuring the safety of an ADS is one of the central challenges in being able to release autonomous vehicles to the market. Safety can be viewed as the absence of risk and this is also one of the most tractable ways of viewing it. One of the largest challenges with ADS is to ensure that the ADS upholds the agreed safety levels or risk levels of the system when the controlling the vehicle, such as e.g. during planning and execution of paths and/or trajectories.

In general, a conventional path planning system generates a target path for an autonomous vehicle from a given drivable area that is typically provided based on data from a perception system. The target path is assumed to be sent to a vehicle controller that computes steering angles and acceleration such that the vehicle follows the path.

There is therefore a need in the art for new methods and systems that improve the capability for ADS-equipped vehicles to take more performant actions and decisions during run-time, while ensuring the safety of the vehicle occupants and other road users.

EP 3 940 487 A1 discloses a computer-implemented method and processing system for estimating a probability of failure for different severity levels for an Automated Driving System (ADS) feature in a virtual test environment. In more detail, the embodiments disclosed therein enable the estimation of a probability of crash of different severities, by utilizing a limit state function (LSF) that attains increasingly negative or positive values after crash (e.g. when TTC = 0 or PET = 0).

DE 10 2012 009 297 A discloses a method that involves informing a priority list and driver preferences to a driver of a vehicle in accordance with a time of a desired system interference and/or a determined driver condition of the driver in a number of escalation steps by driver instructions, warning and/or supported by an automatic intervention in a longitudinal and/or lateral control of the vehicle. An information, warning and an automatic engagement, which results during a risk of collision and/or secondary collision is provided with a highest priority in the priority list.

SUMMARY

It is therefore an object of the present invention to provide a solution for estimating a risk exposure of a vehicle equipped with an automated driving system (ADS) during run-time that alleviates all or at least some of the drawbacks of presently known solutions.

In particular it is an object of the invention to provide a solution for estimating a risk exposure of an ADS-equipped vehicle in terms of second order risks, during run time.

This object is achieved by means of a method for run-time estimation of risk exposure of an ADS-equipped vehicle, a computer-readable storage medium, an in-vehicle processing system, an a vehicle comprising such an in-vehicle processing system as defined in the appended independent claims. The term exemplary is in the present context to be understood as serving as an instance, example or illustration.

According to a first aspect of the present invention, there is provided a method for run-time estimation of risk exposure of an ADS-equipped vehicle. The method comprises obtaining, by one or more processors, input data comprising:

- At least one candidate state of the vehicle, wherein each candidate state comprises a set of candidate state parameters of the vehicle.
- At least one predicted scene of the surrounding environment of the vehicle at each candidate state, wherein each predicted scene comprises a set of scene parameters of the surrounding environment of the vehicle and a scene probability metric of the scene occurring at an associated candidate state.
- At least one event for each predicted scene, wherein each event comprises an event probability metric of the event occurring in the predicted scene and a set of event parameters of each event.

The method further comprises processing, by one or more processors, the obtained input data using a trained machine learning algorithm configured to evaluate the at least one candidate state. In more detail, the trained machine learning algorithm is configured to evaluate the at least one candidate state by, for each candidate state that is associated with at least one predefined incident occurring with a probability exceeding a predefined allowable frequency of occurrence for that incident during a predicted temporal development of each event, generating, by one or more processors, an output indicating that candidate state as a high-risk state for the vehicle. Moreover, the trained machine learning algorithm is configured to evaluate the at least one candidate state by, for each candidate state that is associated with at least one predefined incident occurring with a probability below the predefined allowable frequency of occurrence for that incident during a predicted temporal development of each event, generating, by one or more processors, an output indicating that candidate state as an acceptable-risk state for the vehicle. Further, the method comprises determining, by one or more processors, a path to be executed by the vehicle based on the evaluated at least one candidate state.

According to a second aspect of the present invention, there is provided a (non-transitory) computer-readable storage medium storing one or more programs configured to be executed by one or more processors of an in-vehicle processing system, the one or more programs comprising instructions for performing the method according to any one of the embodiments disclosed herein. With this aspect of the invention, similar advantages and preferred features are present as in the previously discussed first aspect of the invention.

The term "non-transitory," as used herein, is intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link. Thus, the term "non-transitory", as used herein, is a limitation of the medium itself (i.e., tangible, not a signal) as opposed to a limitation on data storage persistency (e.g., RAM vs. ROM).

According to a third aspect of the present invention, there is provided an in-vehicle processing system for run-time estimation of risk exposure of an ADS equipped vehicle, comprising control circuitry configured to obtain input data comprising:

- At least one candidate state of the vehicle, wherein each candidate state comprises a set of candidate state parameters of the vehicle.
- At least one predicted scene of the surrounding environment of the vehicle at each candidate state, wherein each predicted scene comprises a set of scene parameters of the surrounding environment of the vehicle and a scene probability metric of the scene occurring at an associated candidate state.

- At least one event for each predicted scene, wherein each event comprises an event probability metric of the event occurring in the predicted scene and a set of event parameters of each event.

The control circuitry is further configured to process the obtained input data using a trained machine learning algorithm configured to evaluate the at least one candidate state. In more detail, the trained machine learning algorithm is configured to evaluate the at least one candidate state by, for each candidate state that is associated with at least one predefined incident occurring with a probability exceeding a predefined allowable frequency of occurrence for that incident during a predicted temporal development of each event, generating an output indicating that candidate state as a high-risk state for the vehicle. Moreover, the trained machine learning algorithm is configured to evaluate the at least one candidate state by, for each candidate state that is associated with at least one predefined incident occurring with a probability below the predefined allowable frequency of occurrence for that incident during a predicted temporal development of each event, generating an output indicating that candidate state as an acceptable-risk state for the vehicle. Further, the control circuitry is configured to determine a path to be executed by the vehicle based on the evaluated at least one candidate state. With this aspect of the invention, similar advantages and preferred features are present as in the previously discussed first aspect of the invention.

According to a fourth aspect of the present invention, there is provided a vehicle comprising a perception system comprising one or more sensors configured to monitor a surrounding environment of the vehicle. The vehicle further comprises an Automated Driving System (ADS) configured to generate and execute candidate paths, and an in-vehicle processing system according to any one of the embodiments disclosed herein. With this aspect of the invention, similar advantages and preferred features are present as in the previously discussed first aspect of the invention.

Further embodiments of the invention are defined in the dependent claims. It should be emphasized that the term "comprises/comprising" when used in this specification is taken to specify the presence of stated features, integers, steps, or components. It does not preclude the presence or addition of one or more other features, integers, steps, components, or groups thereof.

These and other features and advantages of the present invention will in the following be further clarified with reference to the embodiments described hereinafter.

## BRIEF DESCRIPTION OF THE DRAWINGS

Further objects, features and advantages of embodiments of the invention will appear from the following detailed description, reference being made to the accompanying drawings, in which:

Fig. 1 is a schematic flow chart representation of a method, performed by an in-vehicle processing system, for estimating a risk exposure of a vehicle equipped with an automated driving system (ADS) in accordance with some embodiments.

Fig. 2 is a schematic flow chart representation of a method, performed by an in-vehicle processing system, for estimating a risk exposure of a vehicle equipped with an automated driving system (ADS) in accordance with some embodiments.

Fig. 3 is a schematic top-view illustration of a vehicle on a road portion illustrating an example effect on a path planning module in accordance with some embodiments.

Figs. 4a - 4c are schematic top-view illustrations of a vehicle on a road portion in some example scenarios in accordance with some embodiments.

Fig. 4d is a schematic top-view illustration of a vehicle on a road portion illustrating an example scene that is simulated in a virtual test environment.

Fig. 5 is a schematic block diagram representation of an anomaly detection system in the form of an autoencoder in accordance with some embodiments.

Fig. 6 is a schematic block diagram representation of an in-vehicle processing system for estimating a risk exposure of a vehicle equipped with an automated driving system (ADS) in accordance with some embodiments.

Fig. 7 is a schematic side-view illustration of a vehicle comprising an in-vehicle processing system for estimating a risk exposure of a vehicle equipped with an automated driving system (ADS) in accordance with some embodiments.

Fig. 8 is a schematic top view illustration of a risk map with some of the different components contributing to the risk map in accordance with some embodiments.

Fig. 9 is a schematic block diagram representation of a simulation system for estimating a risk exposure of a vehicle equipped with an automated driving system (ADS) in a virtual test environment.

Fig. 10 is a schematic block diagram representation of a manifold calculator depicting the different iteration levels of the simulation.

Fig. 11 is a schematic block diagram representation of an architecture for training the first machine learning algorithm in accordance with some embodiments.

## DETAILED DESCRIPTION

In the following detailed description, embodiments of the present invention will be described. However, it is to be understood that features of the different embodiments are exchangeable between the embodiments and may be combined in different ways, unless anything else is specifically indicated. Even though in the following description, numerous specific details are set forth to provide a more thorough understanding of the present invention, it will be apparent to one skilled in the art that the present invention may be practiced without these specific details. In other instances, well known constructions or functions are not described in detail, so as not to obscure the present invention.

Those skilled in the art will appreciate that the steps, services and functions explained herein may be implemented using individual hardware circuitry, using software functioning in conjunction with a programmed microprocessor or general purpose computer, using one or more Application Specific Integrated Circuits (ASICs), Field Programmable Gate Arrays (FPGA) and/or using one or more Digital Signal Processors (DSPs). It will also be appreciated that when the present invention is described in terms of a method, it may also be embodied in one or more processors and one or more memories coupled to the one or more processors, wherein the one or more memories store one or more programs that perform the steps, services and functions disclosed herein when executed by the one or more processors.

## OVERVIEW

As mentioned in the foregoing, assuring safety of automated driving systems (ADSs) is one of the central challenges in being able to release such systems to the market. Since the approach of statistical brute force validation is generally considered to be infeasible, there is a need for more refined methods. Other alternatives include formal methods, where the ADS is proven to be safe given certain sets of assumptions about its operational environment. For example, there have been some attempts to mitigate this problem by for example providing a method for computing invariably safe states for motion planning of autonomous vehicles, but in general such solutions do so under the assumptions of rule-behaving traffic and without additional uncertainties.

However, in many cases the potential safety risks that an ADS will face are from situations that are not within the frameworks defined by common traffic rules or even within the frameworks defined by conventional driving scenarios, but rather what is called corner cases or edge cases. These cases could include vulnerable road users (VRUs) appearing either on the perception border (i.e. at the periphery of the capabilities of the ADS's perception system) or from an occluded state that the ADS cannot perceive. Other such cases include very aggressive driving or unexpected/irrational driving manoeuvres from nearby traffic participants or adverse weather/road conditions.

Thus, in order to better estimate the risk exposure of the ADS, one should account for the risks associated with the currently perceived and predicted states of both the own vehicle (i.e. ego-vehicle) as well as the currently perceived and predicted states of surrounding objects (e.g. other vehicles). Further, it is herein proposed that the risk associated with the presence of perceived objects making unexpected/irrational decisions and with the prediction of presence of (currently) non-perceived objects is included together with the estimated and predicted capabilities of the ego-vehicle's ADS.

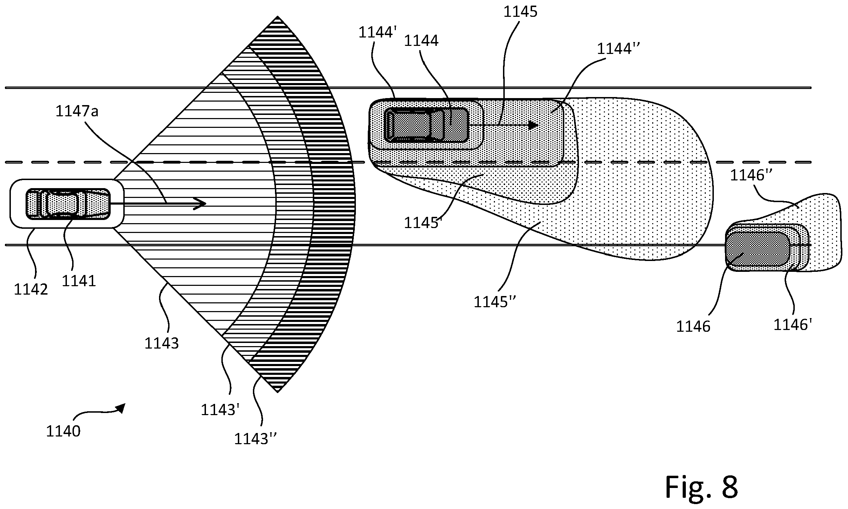

These metrics may for example be estimated by constructing a "risk map" of the surrounding environment of the ADS-equipped vehicle. In the present context, a risk map estimates and quantifies a view of the "risk" across the ADS's surrounding (i.e. of the ego-vehicle's surroundings), and preferably includes sensor capabilities, uncertainties in detections and predictions as well as uncertainties in the available capabilities of the vehicle platform (e.g. braking capability, steering capability, capability of the ADS, and so forth). In more detail, the risk estimate that is obtained from the risk map is not dependent on any intermediary threat measure or similar (such as e.g. Brake Threat Number). Instead it may be understood as a direct estimate of the risk based on a number of models underpinning the worldview of the ADS (the "worldview" of the ADS may be understood as the perceived reality of the ADS using sensor data, map data, etc.), as well as on an estimate of the ADS's own capabilities. Further, this approach provides a continuous measure between no risk and crash as opposed to other existing methods to evaluate the performance of automated/autonomous vehicles, which are of more binary nature. Further details regarding the risk map are provided in reference to Fig. 8 below.

Moreover, the present inventors realized that in order to further improve the estimation of the risk exposure of an ADS, one must account for the "second order risk", i.e. the risk which an adverse event imposes on the ADS-equipped vehicle while accounting for the ADS's capability of avoiding an incident (e.g. near-collision or collision) should the adverse event take place.

In the present context, these "second order risks" may for example occur during events where there is a risk of an incident (e.g. collision) with an object that is "perceived" by the ADS of the vehicle but which makes a rare or an unexpectedly aggressive action, or where there is a risk of an incident with "non-perceived objects". In the present context, "non-perceived objects" may for example be objects that are occluded or outside of the limit of the field of view of the ADS's perception capabilities. The term "incident" as used herein refers to a collision (of different severity levels as given by an applicable standard or equivalent agreement) or a near-collision (i.e. the ADS managed to avoid a collision but violated one or more predefined safety margins or safety thresholds).

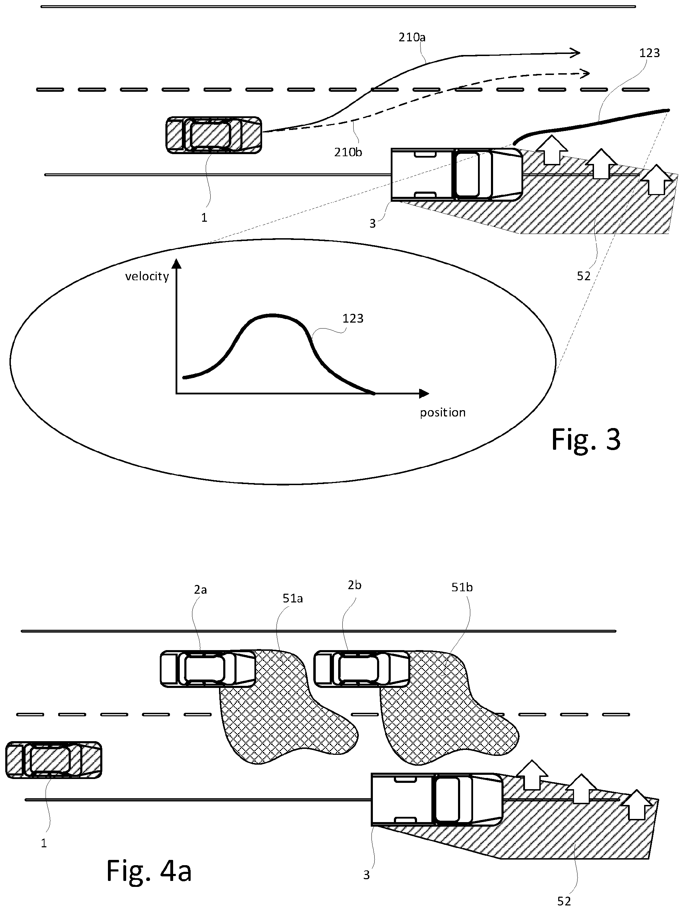

Fig. 4a is a schematic top-view illustration of a vehicle 1 traveling on a road portion, depicting these two types of "events". In more detail, the ego-vehicle 1 is traveling behind two other vehicles 2a and 2b, where the shaded areas 51a, 51b schematically illustrate the potential actions that are used to estimate the second order risk. Moreover, there is a stationary vehicle 3 situated on the road shoulder or edge of the road portion, where the occluded area 52 in front of the stationary vehicle 3 may lead to the other event where non-perceived objects may appear. In other words, Fig. 4a illustrates two types of events that are considered for second order risks - one event that is associated with objects that are perceived by the ADS, and another event associated with risks related to occlusions or on the perception limits of the ADS.

A "second order risk" for the above-mentioned first example event/situation (perceived object making unexpected actions) may in the present context be understood as: Given a certain relative position to a perceived object - what is the probability of a certain incident (i.e. failure) associated with a certain set of actions from the perceived object(s) and their respective probabilities as well as the response of the ADS to each of these situations.

Therefore, by accounting for the interaction between the ADS and the potentially hazardous object, and furthermore, by including the capability of the ADS to make "correct" decisions so to avoid any incidents with the potentially hazardous object, a more accurate estimation of the ADS's risk exposure in various scenarios can be provided. Consequently, it is possible to deduce which states (e.g. positions, headings, speeds, etc.) of the ADS-equipped vehicle that can be considered "high-risk" or "acceptable-risk" for any relevant event. With this knowledge, it is then possible to train a machine learning algorithm (e.g. a suitable artificial neural network) that is able to evaluate these states in run-time.

In other words, by means of the embodiments of the invention described herein, an enhanced estimate of the risk exposure of ADS-equipped vehicles is achievable in run-time (i.e. while the vehicle is operating in traffic). In more detail, the utilized machine learning algorithm may be trained by utilizing an elaborate simulation system where the viable/possible/wanted states of the ADS as well as the models of each applicable event are considered as will be further elaborated upon below. The computer-implemented method and processing system as proposed herein further improve the performance of the ADS in different situations and may for example be utilised to improve the operational reliability in terms of safety and/or as a means to reduce unnecessary safety margins during run-time path planning. In reference to the latter, a more comfortable autonomous driving experience is readily achievable. In particular, the herein proposed solution provides an enhanced estimate of the set of states that the decision making module/component of the ADS should avoid in order to uphold the agreed safety/risk level of the ADS.

## RISK MAP

Turning to Fig. 8, there is provided a schematic top view illustration of a risk map 1140 with some example components 1141 - 1146" contributing to the risk map 1140 in accordance with some embodiments of the present invention. Furthermore, a planned path for execution 1147a-c of the ego-vehicle is indicated in the map 1140.

In more detail, the risk map 1140 comprises information indicative of an actuation capability of the vehicle and is exemplified in Fig. 8 as an estimated braking capacity of the vehicle 1143 including uncertainty estimation 1143', 1143" of the same. The actuation capability of the vehicle may for example include one or more actuation parameters such as e.g. braking capacity, maximum steering angle, maximum acceleration capability, etc. and further include an uncertainty estimate for each parameter. The actuation capability and the associated uncertainty estimate(s) may be determined in real-time based on a predefined model given one or more real-time variables such as e.g. a speed of the vehicle, an acceleration of the vehicle, vehicle properties (vehicle dimensions, vehicle weight, etc.), road surface properties, and so forth, as readily understood by the skilled person in the art. The uncertainty estimates may be derived from predefined statistical models associated with each actuation parameters, where the actuation capability is given by the mean or mode value and the uncertainty estimate is given by e.g. one or two standard deviations above or below the mean.

Further, the risk map 1140 comprises a geographical position 1141 of the ego-vehicle in the map (as deduced from a candidate state of the vehicle), the uncertainty estimation 1142 of the geographical position 1141, a position of external objects 1144, 1146, uncertainties of the position of the external objects 1144', 1144", 1146', trajectories 1145 of dynamic objects 1144 and uncertainties 1145' 1145" of the trajectories 1145. The estimated geographical position 1141 of the vehicle and the uncertainty estimates 1142 related thereto are comprised in the candidate state of the ego-vehicle, while the estimates related to the external objects 1144 and uncertainty estimates related thereto are comprised in the predicted scene of the surrounding environment.

The estimated uncertainties may for example be computed based on models (predefined or self-learning/Machine-learning models or algorithms) that define a tolerance or error-margin in the measurements provided from the sensors of a vehicle (e.g. cameras, radar, LiDAR, ultrasonic sensors, etc.). Thereby, the formed risk map 1140 also accounts for uncertainties inherent in such measurements of the vehicle's worldview caused by for example, sensor manufacturing tolerances, noise, and so forth. Accordingly, the whole risk estimation is rendered more accurate and reliable, more accurately reflecting the actual risk exposure of the ADS of the vehicle. The terms "risk exposure of the ADS" and "risk exposure of the vehicle" are herein used interchangeably.

In short, the risk map 1140 provides an exemplary means to evaluate a "candidate state" of the vehicle in accordance with some embodiments. The risk map 1140 may be formed based on an estimated actuation capability/capabilities (including their uncertainties) and an estimation of the location of free-space areas (including their uncertainties). The free-space areas may for example be derived from sensor data of one or more vehicle-mounted sensors configured to monitor the surrounding environment of the vehicle. Nevertheless, the sensor data may also originate from other sensors in the vicinity of the vehicle, e.g. sensors mounted on other vehicles or on infrastructure elements and obtained via a V2V or V2X communication network.

Free-space areas may in the context of the present invention be understood as areas in the surrounding environment of the ego-vehicle absent of objects (e.g. other vehicles, pedestrians, barriers, animals, bicycles, static objects, etc.). Thus, the obtained/determined/estimated location of free-space areas may be understood as estimates of areas absent of external objects (static and dynamic objects) as well as an estimate of the uncertainty of this determination, i.e. the likelihood of the determined location of the free-space area actually being true.

Moreover, in some embodiments, the location of free-space areas comprises a position of external objects located in the surrounding environment of the ego-vehicle. The estimated position of the external objects may include uncertainties of the position of the external objects, estimated trajectories of any dynamic objects of the external objects and uncertainties of the estimated trajectories of the dynamic objects. However, in some embodiments the location of free-space areas is determined by a dedicated module of the vehicle, where the dedicated module is configured to obtain sensor data indicative of the surrounding environment of the vehicle, and to derive the location of the free-space areas with respect to the vehicle based on the sensor data. Thus, there does not have to be an intermediate step or layer where objects are detected before the location of the free-space areas is obtained, i.e. the "free-space area" may be obtained directly. For example, a signal emitted by a Lidar may propagate through space for a certain distance before it is reflected from some surface, then this area between the Lidar and the surface may be defined as a "free-space area" without any operation or step to define the surface that the signal was reflected from.

Further, the risk map 1140 comprises a risk parameter for each of a plurality of area segments comprised in the surrounding environment of the ego-vehicle. The area segments may for example be defined by cells of an overlaid virtual grid (not shown). Thus, one can utilize the ADS's readily available functionality of estimating the "free space" in the surrounding area of the ego-vehicle and the functionality of estimating the operating capabilities of the vehicle platform (both of which are generally used for making decisions and controlling the vehicle), and then use this functionality in order to generate a risk map 1140.

Each risk parameter may for example be indicative of a probability of an accident event or of a probability of violating any predefined safety margin or threshold if the vehicle were to occupy an associated area segment, or more specifically for a candidate state of the vehicle to occupy that area segment. In a simplified example, if a first area segment is completely within an area occupied by an external vehicle, then that first area segment may have a risk parameter indicating that the first area segment is a "high risk" segment. This is at least partly based on the logical reasoning that if the vehicle where to occupy that area segment, one can assume that there is a relatively high probability of collision with the external vehicle. Analogously, if a second area segment is completely within a drivable road segment void of any external objects, then that second area segment may have a risk parameter indicating that the second area segment is a "low risk" segment.

The term "probability of violating a predefined safety margin or threshold" may for example be an estimate of a probability of violating a predefined minimum distance to other vehicles or other objects. Thus, given some statistical model indicative of certain scenarios occurring in the operational design domain (ODD) of the vehicle, one can estimate the probability of an external vehicle performing an unexpected manoeuvre which would cause a violation of the predefined minimum distance to a lead vehicle, and also estimate the probabilities of this specific action taking place on various scenarios. In other words, the risk parameters does not necessarily have to indicate a probability of an accident event, but may be defined on other metrics such as exemplified above. Other examples include other quality metrics such as distance to road edge, magnitude of jerk (e.g. lateral acceleration), and so forth.

In summary, the risk map 1140 is constructed by incorporating the risks associated with the currently perceived and predicted states of both the ego-vehicle 1141 as well as surrounding objects 1144, 1146. Further, the risk associated the presence and prediction of presence of (currently) non-perceived objects are included as well as the estimated and predicted capabilities of the ADS-equipped ego-vehicle.

Thus, the risk map 1140 readily provides an estimate of the probability of the aforementioned events occurring that are associated with the "second order risks", i.e. the probability of an incident with an object that the ADS perceives but which makes a rare or aggressive action and the probability of an incident with non-perceived objects that might be present but occluded or on the limit of the field of view of the ADS. However, the interaction between the ADS and the erratic/unexpected objects are not inherently encoded in the risk map, and it is an object of the present invention to account for this interaction as well in the overall risk estimate. Further details related to the formation and utilization of a "risk map" are provided in European Patent Application No. 20196794.0, incorporated herein by reference.

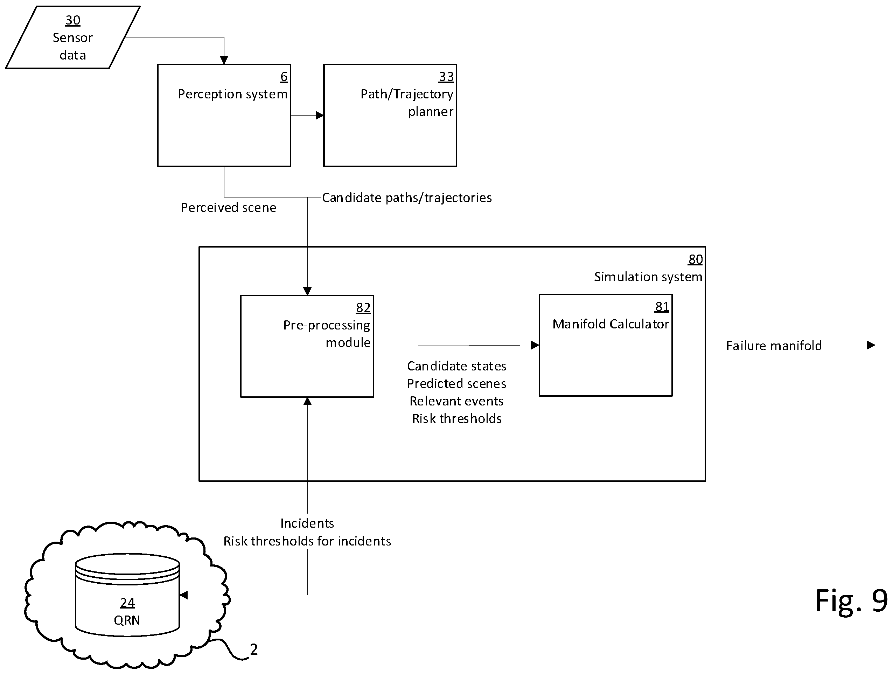

It should be noted that even though the above description in reference to the risk map pertains to a real-time or run-time formation of a risk map, it goes without saying that the risk map may be constructed offline or in "design-time" based on stored sensor data from one or more vehicles. Alternatively, the run-time constructed risk maps may be stored (in a local memory device of the vehicle or a remote memory device accessible by the vehicle). Either way, the stored sensor data or the stored risk maps may then be used offline for the purpose of obtaining the candidate states, predicted scenes and relevant events for performing the simulation methods as discussed in reference to Figs. 9 -11 herein.

## RUN-TIME ESTIMATION OF RISK EXPOSURE OF AN ADS-EQUIPPED VEHICLE

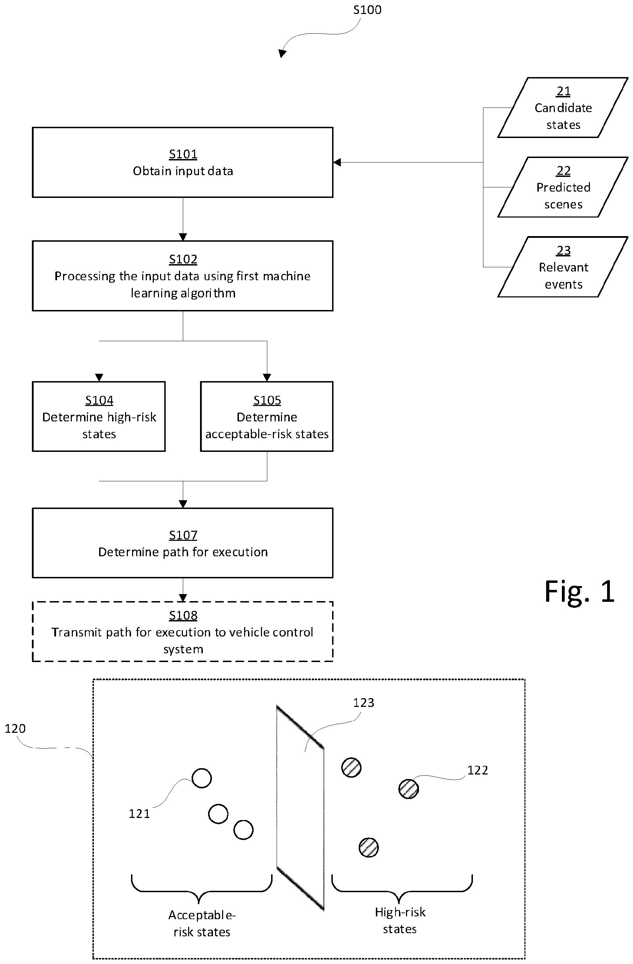

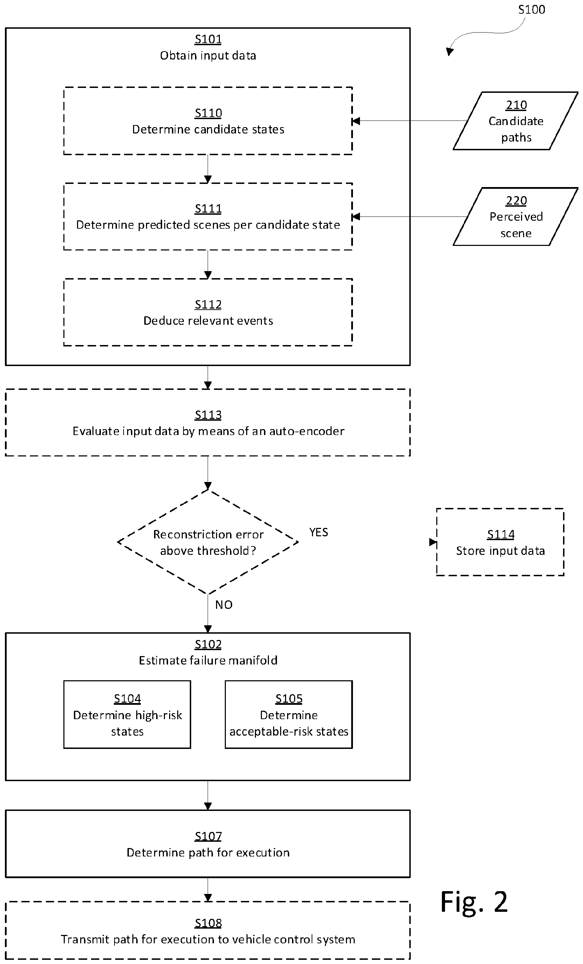

Figs. 1 and 2 are schematic flow chart representations of a method S100, performed by an in-vehicle processing system, for estimating a risk exposure of a vehicle equipped with an automated driving system (ADS) in accordance with some embodiments. In particular the method S100 is suitable for estimating the risk exposure of an ADS-equipped vehicle in terms of second order risks in run-time (i.e. while the vehicle is operating in traffic). The method S100 is preferably implemented as one or more programs comprising instructions for performing the method, where the one or more programs are configured to be executed by one or more processors of an in-vehicle processing system. In contrast to Fig. 1, Fig. 2 contains some additional optional steps in accordance with some embodiments which may be included individually or in various combinations.

The method S100 comprises obtaining S101 input data comprising one or more candidate states 21 of the vehicle, at least one predicted scene 22 of the surrounding environment of the vehicle at each candidate state, at least one event 23 for each predicted scene. Generally, "a set" may in the present context to be understood as "one or more". The term obtaining is herein to be interpreted broadly and encompasses receiving, retrieving, collecting, acquiring, deriving, determining, and so forth.

In more detail, the candidate states 21 may be understood as potential/achievable/planned states of the ego-vehicle, where each candidate states 21 comprises a set of candidate state parameters of the ego-vehicle. In other words, the candidate states 21 may be understood as states that are under consideration in a planning stage. The candidate state parameters may include one or more of a geographical position of the vehicle, a heading of the vehicle, an ADS configuration of the vehicle, an actuation capability of the vehicle, vehicle dimensions, and a vehicle weight.

In some embodiments, the ADS configuration of the vehicle comprises information about the capabilities of the ADS, for example capabilities in terms of how the ADS is configured to handle certain traffic scenarios should they occur. In more detail, the ADS configuration may be indicative of the capabilities of the ADS for handling a traffic scenario where a nearby external vehicle unexpectedly cuts-in in front of the ego-vehicle at a distance of 5 meters in front of the ego-vehicle while the ego-vehicle is traveling at a speed of 100 km/h. Here, the ADS may be configured to slow down with a certain deceleration in order to increase the distance to the external vehicle, to switch to a nearby lane, or move to the road shoulder and stop the ego-vehicle, and so forth depending on the specific scenario (which includes positions and predicted actions of other dynamic objects). Similarly, the ADS configuration may be indicative of the capabilities of the ADS for handling a traffic scenario where a moose or deer suddenly jumps out on the road 30 meters in front of the vehicle while the ego-vehicle is traveling at a speed of 80 km/h. Here, the ADS may be configured to initiate an emergency brake manoeuvre, to steer around the moose or deer while decelerating in a controlled manner, to estimate the trajectory of the moose or deer and act accordingly, and so forth depending on the specific scenario (which includes positions and predicted actions of other dynamic objects).

The actuation capability of the vehicle may for example include one or more actuation parameters such as e.g. braking capacity, maximum steering angle, maximum acceleration capability, etc. including an uncertainty estimate for each parameter. The actuation capability may be derived from sensor data may for example be obtained from vehicle-mounted sensors, internal control units, or the like. The actuation capability and the associated uncertainty estimate(s) may be determined based on a predefined model given one or more physical variables such as e.g. current speed, vehicle properties (vehicle dimensions, vehicle weight, etc.), road surface properties, and so forth, as readily understood by the skilled person in the art. The uncertainty estimates may be derived from predefined statistical models associated with each actuation parameters, where the actuation capability is given by the mean or mode value and the uncertainty estimate is given by e.g. one or two standard deviations above or below the mean.

In some embodiments, the candidate state parameters are deduced from a candidate trajectory 210 or candidate path 210 of the vehicle. In more detail, a path planning module of the ADS may output one or more candidate paths 210 or candidate trajectory 210, and the relevant candidate states 21 may be derived from these candidate paths 210 by isolating specific states of the vehicle along the candidate paths 210. An advantage of analysing candidate paths instead of candidate states directly is that it relieves the need for testing candidate states which might anyhow not be relevant (but which might have been included in a set of candidate states due to looser selection conditions). Another advantage of analysing candidate paths instead of candidate states directly the combinatorial factor of possible predicted scenes at each candidate state is reduced, which renders the whole method S100 more computationally efficient. In more detail, with the notion of analysing a candidate trajectory or candidate path instead of a single state, the time evolution of the predicted scene is also connected to the trajectory or path leading up to the candidate state. Conversely, when analysing the states directly, all possible predicted scenes pertaining to any trajectory leading to the state should be considered, even though only one of those trajectories or paths may have been relevant from the ADS's perspective. Thus, even in the case where the same state is reached with two different candidate paths or candidate trajectories this will still lead to less of a computational effort as it will only result in envelop of predictions across each scene corresponding to the two candidate paths.

Furthermore, each predicted scene 22 comprises a set of scene parameters of the surrounding environment of the vehicle and a scene probability metric of the scene occurring at an associated candidate state. The scene probability metric may be given from the compounded probability of various objects being at predicted locations at one or more moments in time defining the timing of the predicted scene. Thus, the probability metric may for example be a percentage defining the likelihood of the predicted scene occurring ranging from 0 % to 100 %. The probabilities of various objects in the surrounding environment of the vehicle being at predicted locations and/or performing predicted actions may for example be obtained from the aforementioned risk map.

In accordance with some embodiments, the set of scene parameters comprises one or more of:

- A predicted location of free-space areas in the surrounding environment of the vehicle and an uncertainty estimation for the predicted location of free-space areas.
- A predicted location of static external objects in the surrounding environment of the vehicle and an uncertainty estimation for the predicted location of the static external objects.

  ◦ Static external objects include, but are not limited to, stationary/parked vehicles, buildings, road barriers, landmarks such as traffic lights and traffic signs, trees, and so forth.

- A predicted location of dynamic external objects in the surrounding environment of the vehicle and an uncertainty estimation for the predicted location of the dynamic external objects.

  ◦ Dynamic external objects include other vehicles, pedestrians, and any other dynamic object in the perceivable range of the ADS.

- A predicted heading of the dynamic external objects in the surrounding environment of the vehicle and an uncertainty estimation for the predicted heading of the dynamic external objects.
- A set of predicted dynamical state parameters of the dynamic external objects in the surrounding environment of the vehicle and an uncertainty estimation for each predicted dynamical state parameter of the set of predicted dynamical state parameters of the dynamic external objects.

  ◦ Dynamical state parameters include, but are not limited to, dimensions of the dynamic external objects, speed of the dynamic external objects, headings of the dynamic external objects, and trajectories of the dynamic external objects.

- A set of environmental conditions in the surrounding environment of the vehicle and an uncertainty estimation for each environmental condition of the set of environmental conditions in the surrounding environment of the vehicle.

○ Environmental conditions include, but are not limited to, lighting conditions, precipitation parameters, road friction parameters, and road geometry.

Further, each event 23 comprises an event probability metric of the event occurring in the predicted scene 22 and a set of event parameters of each event 23. In some embodiments, the set of event parameters comprises a perturbation of one or more scene parameters of the set of scene parameters, an uncertainty estimation for the perturbed one or more scene parameter. In some embodiments, the set of event parameters comprises a set of object parameters of a non-perceived external object, where the set of object parameters include a location of the non-perceived external object, a heading of the non-perceived external object, and a speed of the non-perceived external object. In other words, in some embodiments, the set of event parameters define an unexpected/aggressive manoeuvre of a perceived dynamic object and/or an appearance of one or more unseen potential objects and/or risks related to occlusions. As mentioned in the foregoing, the relevant set of events 23 may be derived based on the information encoded in the aforementioned risk map.

In some embodiments, the predicted scenes are determined S111 based on the currently perceived scene 220 of the ADS (i.e. the "worldview" of the ADS at a current state of the ADS), and the obtained candidate states 21. The candidate states 21 may as mentioned be directly received or derived S110 from the candidate paths/trajectories. Thus, the step of obtaining input data S101 may comprise a pre-processing step, where the candidate states 21 are either deduced S110 from the received candidate paths 210 or directly received. These together with the received perceived scene 220 are used to first derive S111 the predicted scenes 22 corresponding to each (derived or received) candidate state 21 and secondly used to derive S112 the relevant events 23. It should be noted that the derivation S111 of the predicted scenes is slightly more straight-forward (i.e. more computationally efficient) using candidate paths/trajectories rather than the candidate states 21 directly as discussed above. The term "candidate path" may be understood as a potential path for the vehicle as generated by a path planning module of the ADS.

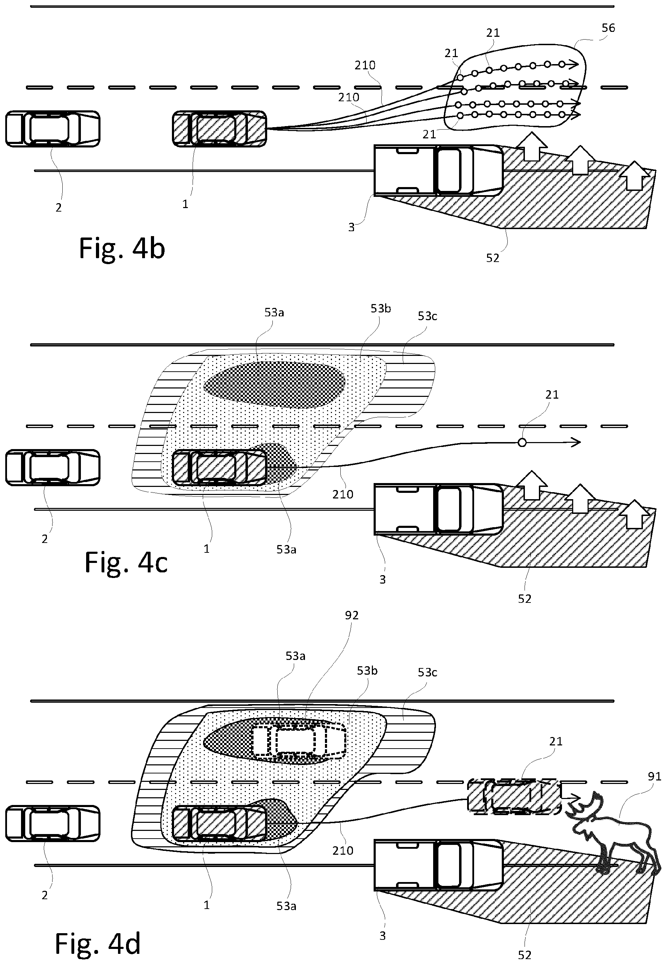

Turning briefly to Fig. 4b, which is a schematic top-view illustration showing how a number of different candidate paths 210 can be used to generate a set of candidate states 21 that are provided as input to the first machine learning algorithm. In the depicted scenario of Fig. 4b, the circled area 56 denotes an area in the scenario that is associated with an "unknown" risk that would be of interest to quantify in order to estimate the second order risk that the ADS-equipped vehicle 1 is exposed to.

Fig. 4c is an example illustration of how a predicted scene for a specific candidate state 21 may be formed. In more detail, the patterned areas 53a, 53b, 53c indicate a probability of occupancy by the external vehicle 2 when the ego-vehicle 1 is in the candidate state 21. In other words, the patterned areas can be construed as a detailing of the predicted scene. Here, the different patterns indicate a different level of probability of occupancy, where the "darker" areas 53a correspond to a higher probability than the "lighter" areas 53c. The middle area 53b correspond to a probability value between the other two 53a, 53c.

Accordingly, the predicted scene is important to include in the input data in order to capture the potential influence from all of the objects in the surrounding environment of the ego-vehicle. For example, the predicted scene depicted in Fig. 4c may take different forms depending of the actions of the ADS during the temporal development of the scene from the ego-vehicle's current position to the candidate state.

Further, the method S100 comprises processing S102 the obtained S101 input data using a trained machine learning algorithm (e.g. a trained artificial neural network) that is configured or trained to evaluate the one or more candidate states. In more detail, the trained machine learning algorithm is configured/trained to for each candidate state that is associated with at least one predefined incident occurring with a probability exceeding a predefined allowable frequency of occurrence for that incident during a predicted temporal development of each event, generate S104 an output indicating that candidate state as a high-risk state for the vehicle. Moreover, the trained machine learning algorithm is configured/trained to for each candidate state that is associated with at least one predefined incident occurring with a probability below the predefined allowable frequency of occurrence for that incident during a predicted temporal development of each event, generate S105 an output indicating that candidate state as an acceptable-risk state for the vehicle.

In other words, the processing S102 may be construed as a step of evaluating S102 the one or more candidate states by means of a trained machine learning algorithm that is configured determine if the one or more candidate states are associated with at least one predefined incident occurring with a probability exceeding a predefined allowable frequency of occurrence for that incident during a predicted temporal development of each event. Preferably, the machine learning algorithm is an end-to-end trained machine learning algorithm configured to output a signal indicative of the risk associated with each candidate state for the vehicle based on the obtained input data.

Further details and examples related to the training of the machine learning algorithm configured to evaluate the one or more candidate states are provided below in reference to Figs. 8 - 12.

Moving on, the method S100 further comprises determining S107 a path to be executed by the vehicle based on the evaluated at least one candidate state. In some embodiments, the step of determining S107 the at least one path comprises rejecting any candidate path comprising a candidate state that is determined as a high-risk state for the vehicle. Moreover, in some embodiments, the step of determining S107 the at least one path to be executed by the vehicle, comprises, for any candidate path associated with a candidate state that is determined as an acceptable-risk state for the vehicle, updating that candidate path to a less conservative path based on a set of quality criteria (may also be referred to as comfort criteria). The quality criteria may comprise one or more thresholds or ranges related to acceleration, deceleration, jerk, and so forth as known in the art.

Further, in some embodiments, the method S100 further comprises transmitting S108 the determined S107 path for execution to a vehicle control system. In other words, once the path has been determined S107, a signal is sent to a suitable control system so to cause the vehicle to executed the determined S107 path.

In some embodiments, the output from the trained machine learning algorithm is a "failure manifold", which may be understood as a subset of the candidate states that are associated with elevated second order risks and should therefore be avoided by the ADS. Thus, in some embodiments, the machine learning algorithm is configured/trained to output a failure manifold indicative of which candidate states are high-risk states for the vehicle and which candidate states are acceptable-risk states of the one or more candidate states comprised in the input data. In general, a "manifold" is in the present context to be understood in a mathematical context, and may be construed as a collection of points forming a certain kind of set, such as those of a topologically closed surface or an analogue of this in three or more dimensions.

The parameters considered by the trained machine learning algorithm in a certain event (of a predicted scene for a candidate state) could be any combination of physical states with associated measures with a defined "direction" (e.g. higher velocity results in increased risk of severe injuries, higher steering wheel angle reduces the available manoeuvrability, etc.). The parameters considered could include position, velocity, acceleration, steering angle, etc. Since these have direction and a physical interpretation it is sufficient to produce a manifold pertaining to the failure region rather than a complete mapping of all relevant states and their associated second order risks, as states on one side of the manifold will have an acceptable level of second order risk whereas the other states will not. This can be illustrated as shown in the dotted box 120 of Fig. 1, which depicts an abstract manifold 123 in a 3D space with the "acceptable states" 121 on one side of the manifold 123 and the "high risk" (unacceptable) states 122 on the other side of the manifold 123.

As mentioned, the output from the trained machine learning algorithm can be used to determine one or more paths to be executed by the vehicle by rejecting "unsafe" candidate paths or by updating candidate paths so to avoid unnecessarily "uncomfortable" manoeuvres, thereby improving passenger comfort while still fulfilling safety requirements. The latter is exemplified in Fig. 3, which is a top-view illustration of an ADS-equipped vehicle 1 located on a road portion with an external vehicle 3 at stand-still that is located in front of the ADS-equipped vehicle 1 causing an occluded area to be formed 52 in front of the stationary vehicle 3. In more detail, Fig. 3 shows how the failure manifold 123 may be used to change the planned candidate path or candidate trajectory generated by the ADS, where 210a depicts the candidate path as output by the ADS before the formation of the failure manifold 123 and 210b depicts the candidate path as output by the ADS after the formation of the failure manifold 123. The states included in the failure manifold 123 here include not only positions but also the velocity of the ADS-equipped vehicle at each point.

Further, in some embodiments, the method S100 comprises, prior to processing S102 the obtained input data using the first machine learning algorithm, evaluating S113 the obtained input data using a second machine learning algorithm in order to determine an operational validity of the first machine learning algorithm for the obtained input data. In more detail, the second machine learning algorithm is trained with the same dataset as the first machine learning algorithm, and the second machine learning algorithm is configured to generate an output indicative of a level of confidence of an output of the first machine learning algorithm for a given set of input data. Accordingly, the steps of processing S102 the input data using the first machine learning algorithm and determining the path to be executed by the vehicle are only performed if the level of confidence of the output (i.e. operational validity) of the first machine learning algorithm for the obtained input data is above a threshold. Analogously, if the level of confidence of the output of the first machine learning algorithm for the obtained input data is below the threshold, the method comprises storing S114 the obtained input data.

Accordingly, the obtained S101 input data is used to determine the operational validity or confidence level of the trained first machine learning algorithm's output by means of the second machine learning algorithm. If the confidence level is associated with an acceptable performance (above a threshold), the trained first machine learning algorithm is used to estimate the failure manifold (i.e. to evaluate the one or more candidate states). However, if the confidence level is not acceptable (below a threshold), the obtained S101 input data is instead stored for subsequent use (e.g. to update the first machine learning algorithm through offline training). In some embodiments the obtained input data S101 is at least temporarily stored in a data buffer of suitable size in parallel to the data feed to the second machine learning algorithm. Then, if the confidence level is not acceptable, the buffered S101 input data is transmitted to a more permanent in-vehicle data storage unit or to a remote data repository.

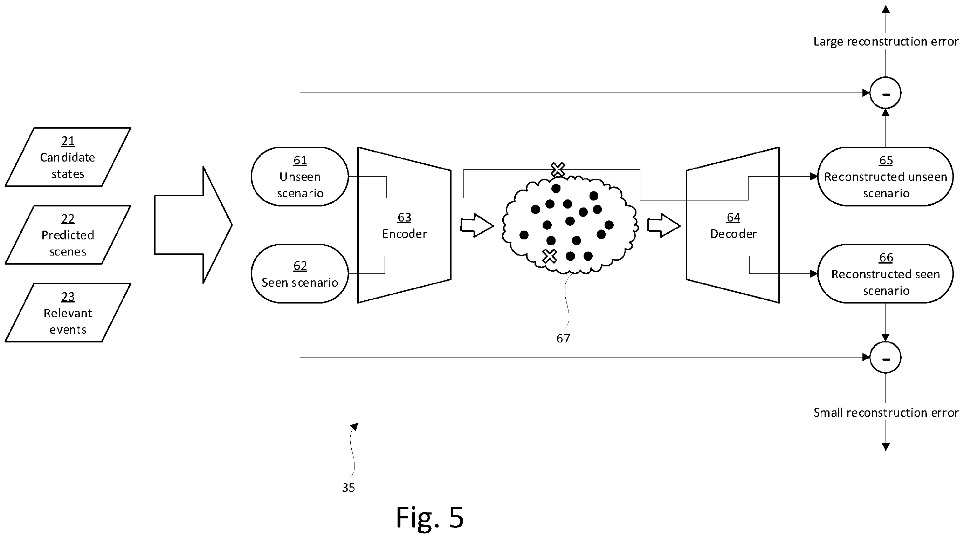

The operational validity (level of confidence) of the output of the first machine learning algorithm may be determined/estimated/monitored using an anomaly detection system 35 comprising the second machine learning algorithm. Fig. 5 is a schematic illustration of an anomaly detection system 35 in accordance with some embodiments. More specifically, the anomaly detection system 35 may comprise an autoencoder trained on the same dataset as the first machine learning algorithm. The autoencoder is configured to consume the same inputs 21, 22, 23 as the first machine learning algorithm (manifold approximator) would consume in run-time. In more detail, the autoencoder will process the inputs 21, 22, 23 and try to reconstruct them.

Large errors in the reconstruction (i.e. reconstruction errors) indicate a low confidence in the performance of the first machine learning algorithm since it can be concluded that this input data that is associated with the high reconstruction error lies far away from the training dataset used to form the first machine learning algorithm (and the autoencoder). This is further indicated in Fig. 5, where the input data 21, 22, 23 is indicative of an "unseen scenario" 61, i.e. a scenario that was not included in the training dataset. The input data forming the unseen scenario 61 is processed by the encoder 63 and mapped to the code 67 by the encoder. The other part of the autoencoder, namely the decoder 64, then maps the code 67 to a reconstruction 65 of the input, which is subsequently compared to the original input 61. The "extension" of the training dataset is represented by the shape of the code 67 or latent representation 67 of the autoencoder. Small reconstruction errors on the other hand indicate a higher performance of the first machine learning algorithm, where a situation leading to a smaller reconstruction error is represented by the flow from the "seen" scenario 62 to the reconstruction 66 of the "seen scenario".

It should be noted that in some embodiments, the evaluation S113 of the obtained input data using the second machine learning algorithm is not necessarily performed prior to the processing S102 of the input data. Instead, the evaluation S113 of the obtained input data using the second machine learning algorithm may be performed concurrently or after the processing S102 of the input data by the trained first machine learning algorithm. However, in such embodiments, the output of the trained first machine learning algorithm may be rejected or otherwise flagged if the confidence level of the output of the first machine learning algorithm is deemed to be below a threshold (and therefore not taken into consideration for the determination S107 of the path for execution). Analogously, if the confidence level of the output of the first machine learning algorithm is deemed to be above a threshold, the output of the trained machine learning algorithm is taken into consideration for the determination S107 of the path for execution.

Executable instructions for performing these functions are, optionally, included in a non-transitory computer-readable storage medium or other computer program product the instructions being configured for execution by one or more processors.

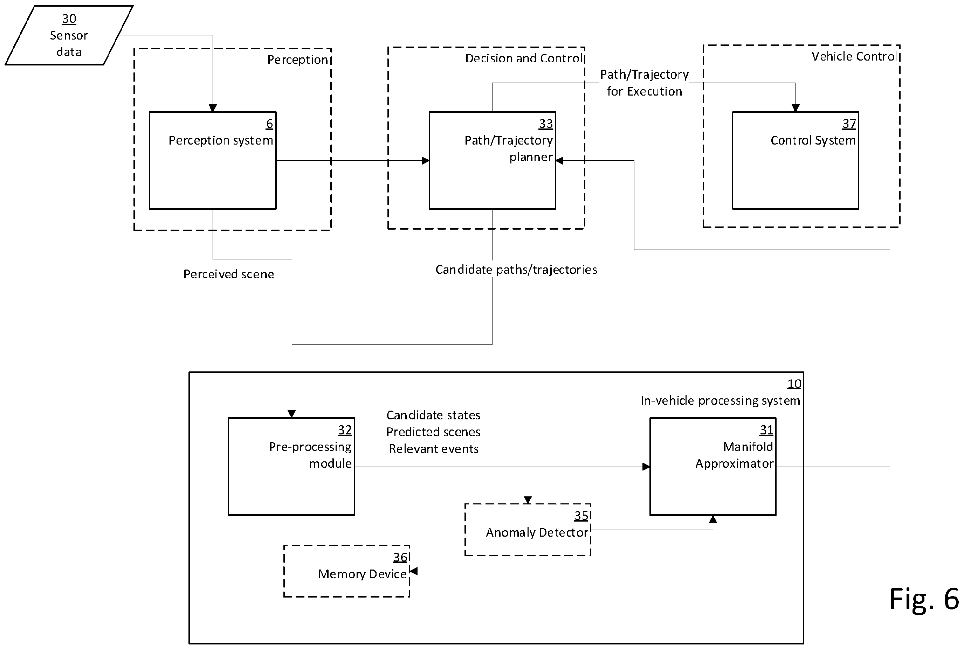

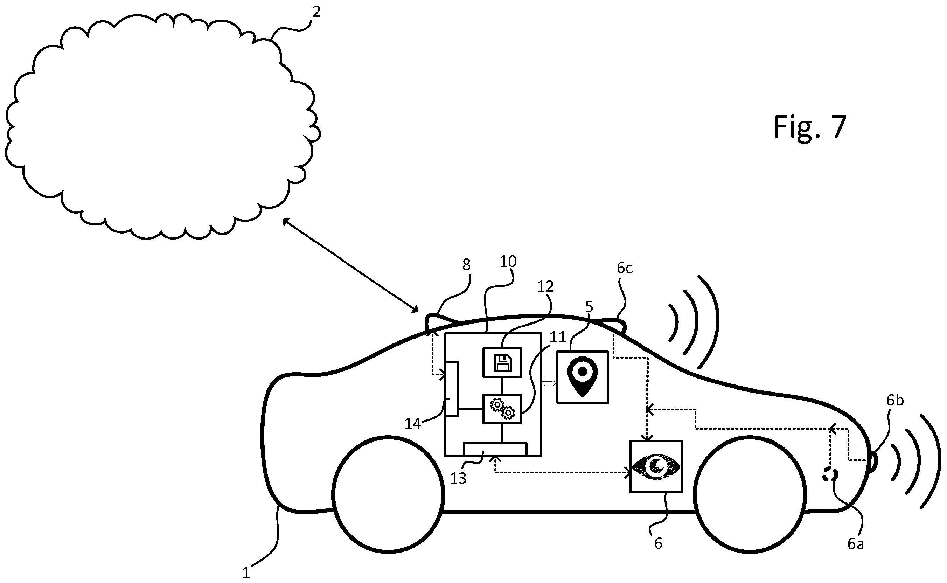

Turning to Fig. 6, there is depicted a schematic block diagram representation of an in-vehicle processing system 10 for estimating a risk exposure of a vehicle 1 equipped with an automated driving system (ADS) in accordance with some embodiments. In particular the in-vehicle processing system 10 is suitable for estimating the risk exposure of an ADS-equipped vehicle 1 in terms of second order risks in run-time (i.e. while the vehicle is operating in traffic). Fig. 7 is a schematic side-view of a vehicle 1 comprising such an in-vehicle processing system 10.

The in-vehicle processing system 10 comprises control circuitry 11 that may be realized as a software controlled processor. However, the control circuitry 11 may alternatively be realized wholly or partly in hardware. In the depicted embodiment of Fig. 6, the control circuitry 11 comprises a set of modules, however, these are not necessarily to be construed as limiting to the present invention, but serve to further elucidate the present invention. As readily understood by the skilled artisan there are several ways to practically realize the inventive concepts disclosed herein, for example by other types of software/hardware architectures than the example embodiment illustrated in Fig. 6 without departing from the scope of the present invention. Such variations may depend on intended applications or system specifications.

Moreover, the in-vehicle processing system 10 may be comprised by/in the ADS architecture of the vehicle together with other depicted parts/components/modules that are generally included in an ADS such as Perception, Decision and Control, and Vehicle Control.

Fig. 6 depicts the flow of information through exposure to a scene in the vehicle surroundings, to the candidate state evaluation processes, and further to the subsequent determination of a path for the vehicle to execute. The processing system 10 comprises various control circuitry configured to perform the functions of the methods disclosed herein, where the functions may be included in a non-transitory computer-readable storage medium or other computer program product storing one or more programs configured for execution by the control circuitry 11. As mentioned, Fig. 6 serves to better elucidate the present invention by depicting various "modules" each of them linked to one or more specific functions described in the foregoing.

Accordingly, the control circuitry 11 is configured to obtain input data comprising at least one candidate state of the vehicle, where each candidate state comprises a set of candidate state parameters of the vehicle. The input data further comprises at least one predicted scene of the surrounding environment of the vehicle at each candidate state, where each predicted scene comprises a set of scene parameters of the surrounding environment of the vehicle and a scene probability metric of the scene occurring at an associated candidate state. Furthermore, the input data comprises at least one event for each predicted scene, where each event comprises an event probability metric of the event occurring in the predicted scene and a set of event parameters of each event.

The control circuitry 11 is further configured to process the obtained input data using a first machine learning algorithm, here denoted as a manifold approximator 31, configured to evaluate the at least one candidate state. The manifold approximator 31 is configured to generate an output indicating a candidate state as a high-risk state if that candidate state is associated with at least one predefined incident occurring with a probability exceeding a predefined allowable frequency of occurrence for that incident during a predicted temporal development of each event. Moreover, the manifold approximator 31 is configured to generate an output indicating a candidate state as an acceptable-risk state for the vehicle if that candidate state is associated with at least one predefined incident occurring with a probability below the predefined allowable frequency of occurrence for that incident during a predicted temporal development of each event. Then, the control circuitry 11 is configured to determine a path to be executed by the vehicle based on the evaluated at least one candidate state.

In some embodiments, the in-vehicle processing system 10 further comprises an anomaly detection system 35, such as the one discussed with reference to Fig. 5 in the foregoing. Analogously, the anomaly detection system 35 of the in-vehicle processing system is configured to consume the input data prior to the input data being fed to the manifold approximator 31 in order to determine the operational validity or confidence level of the manifold approximator's 31 output by means of the second machine learning algorithm. Then, if the confidence level is associated with an acceptable performance, the manifold approximator 31 is used to estimate the failure manifold (i.e. to evaluate the one or more candidate states). However, if the confidence level is not acceptable, the input data is instead stored (e.g. in a memory device 36) for subsequent use (e.g. to update the first machine learning algorithm through offline training).

Moreover, Fig. 6 illustrates an example of embodiment of how the predicted scenes and candidate states, serving as input to manifold approximator 31 (i.e. the trained first machine learning algorithm), may be produced. As mentioned in the foregoing, the candidate states may be derived from candidate paths/trajectories as determined by a path planning or trajectory planning module 33 of the ADS. Thus, in some embodiments, the in-vehicle processing system 10 comprises a pre-processing module 32. The generated candidate paths/trajectories may be provided as an input to a pre-processing module 32 that is configured to extract the relevant candidate states. Furthermore, the pre-processing module 32 may be configured to derive the predicted scenes for the candidate states based on the perceived scenes of the ADS. In other words, one may utilize the ADS's perception system/module 6 in order to generate a perceived scene based on sensor data output by vehicle-mounted sensors. These perceived scenes may then be used to generate a predicted scene for a specific candidate state.

Moreover, as elaborated upon in the foregoing, the derivation of the predicted scenes based on the perceived scenes may be simplified by utilizing candidate paths/trajectories instead of relying on directly obtained candidate states. In more detail, with the notion of analysing a candidate trajectory or candidate path instead of a single state, the time evolution of the predicted scene is also connected to the trajectory or path leading up to the candidate state. Conversely, when analysing the candidate states directly, all possible predicted scenes pertaining to any trajectory leading to the state should be considered, even though only one of those trajectories or paths may be relevant from the ADS's perspective.

Accordingly, the candidate paths/trajectories may be used to derive the candidate states, and these are then used together to facilitate the generation of the predicted scenes from the perceived scenes, where the predicted scenes correspond to each (derived or otherwise obtained) candidate state. The predicted scenes possible at each candidate state may then be used to determine relevant events. The relevant events may for example be derived from the aforementioned risk map and a Quantitative Risk Norm (QRN). The risk map incorporates this part of the information (relevant events) by providing a probability of certain events occurring and may be provided from a dedicated sub-module of the perception system 6 (not shown). The QRN, on the other hand defines the "allowed" frequency of exposures of various incidents during various events (including those provided by the risk map) for the ADS of the vehicle. Thus, using these two information sources (risk map and QRN) it is possible to derive the events that would be of relevance for the manifold estimation in a computationally efficient manner. The QRN may be stored in a suitable local data repository of the vehicle or a remote data repository accessible by the ADS via an external network.

In more detail, a QRN may be understood as a database comprising a "budget" of frequencies allowed for a certain type of incident (e.g. ADS in conflict with a Vulnerable Road User (VRU), ADS crash into another vehicle at velocity $\varepsilon$ [30, 60) km/h). The QRN may be based on a safety norm, which is a type of statistical goal, that in principle states the highest acceptable frequency of failures resulting in accidents having a given severity level. In the automotive industry this norm may be translated to the Automotive Safety Integrity Level (ASIL) of safety goals using the ISO26262 standard, based on estimates of severity, exposure, and controllability of a failure.

As an example, the highest integrity (ASIL D) is sought towards failures in situations that are common (exposure level E4), difficult to control (controllability level C3), and which can lead to accidents resulting in severe injuries or death (severity level S3). The safety goals (i.e. requirements) that are formulated to ensure that such failures do not occur, are thus assigned with ASIL D in accordance with ISO26262. This effectively means that the safety goal should have an estimated failure rate of less than $10^{-9}$ failures/hour. For failures associated with severity levels S2 (survival of involved actors probable) or S1 (light/moderate injuries), given the same exposure level (E4) and controllability level (C3), results in ASIL C and ASIL B, which can be translated to acceptable failure rates of $10^{-8}$ and $10^{-7}$ failures/hour respectively. Thus, for the sake of simplicity and readability, the severity levels discussed herein will be based on the severity level definitions as provided by the ASIL scheme.

In determining the severity of an outcome of an incident, one may for example map a certain outcome and the corresponding severity (e.g. a collision with a vehicle at 50 km/h results in an S2 injury). Accordingly, the "QRN" may comprise such a predefined mapping between a certain outcome and the corresponding severity level. Therefore, by including this type of mapping in the formation of the QRN, the resulting requirements can be transformed into an allowable frequency of occurrence for specific incidents.

As mentioned, Fig. 7 is a schematic side view illustration of a vehicle 1 comprising an in-vehicle processing system 10 for estimating a risk exposure of a vehicle 1 equipped with an automated driving system (ADS) in accordance with some embodiments. The vehicle 1 further comprises a perception module/system 6 (i.e. the perception system of the production platform), and a localization system 5. The localization system 5 is configured to monitor a geographical position and heading of the vehicle, and may in the form of a Global Navigation Satellite System (GNSS), such as a GPS. However, the localization system may alternatively be realized as a Real Time Kinematics (RTK) GPS in order to improve accuracy.

In more detail, the perception module/system 6 may refer to any commonly known system and/or functionality, e.g. comprised in one or more electronic control modules and/or nodes of the vehicle 1, adapted and/or configured to interpret sensory information - relevant for driving of the vehicle 1 - to identify e.g. obstacles, vehicle lanes, relevant signage, appropriate navigation paths etc. The exemplified perception system 6 may thus be adapted to rely on and obtain inputs from multiple data sources, such as automotive imaging, image processing, computer vision, and/or in-car networking, etc., in combination with sensory information. Such exemplifying sensory information may for instance be derived from one or more optional surrounding detecting sensors 6a-c comprised in and/or provided on-board the vehicle 1. The surrounding detecting sensors 6a-c may be represented by any arbitrary sensors adapted to sense and/or perceive the vehicle's 1 surroundings and/or whereabouts, and may e.g. refer to one or a combination of one or more of radar, LIDAR, sonar, camera, navigation system e.g. GPS, odometer and/or inertial measurement units.

The processing system 10 comprises one or more processors 11, a memory 12, a sensor interface 13 and a communication interface 14. The processor(s) 11 may also be referred to as a control circuit 11 or control circuitry 11. The control circuitry 11 is configured to execute instructions stored in the memory 12 to perform a method for estimating a risk exposure of a vehicle 1 equipped with an automated driving system (ADS) according to any one of the embodiments disclosed herein. Stated differently, the memory 12 of the processing system 10 can include one or more (non-transitory) computer-readable storage mediums, for storing computer-executable instructions, which, when executed by one or more computer processors 11, for example, can cause the computer processors 11 to perform the techniques described herein. The memory 12 optionally includes high-speed random access memory, such as DRAM, SRAM, DDR RAM, or other random access solid-state memory devices; and optionally includes non-volatile memory, such as one or more magnetic disk storage devices, optical disk storage devices, flash memory devices, or other non-volatile solid-state storage devices.

Further, the vehicle 1 may be connected to external network(s) 2 via for instance a wireless link (e.g. for retrieving map data). The same or some other wireless link may be used to communicate with other vehicles in the vicinity of the vehicle or with local infrastructure elements. Cellular communication technologies may be used for long range communication such as to external networks and if the cellular communication technology used have low latency it may also be used for communication between vehicles, vehicle to vehicle (V2V), and/or vehicle to infrastructure, V2X. Examples of cellular radio technologies are GSM, GPRS, EDGE, LTE, 5G, 5G NR, and so on, also including future cellular solutions. However, in some solutions mid to short range communication technologies are used such as Wireless Local Area (LAN), e.g. IEEE 802.11 based solutions. ETSI is working on cellular standards for vehicle communication and for instance 5G is considered as a suitable solution due to the low latency and efficient handling of high bandwidths and communication channels.

## ESTIMATION OF RISK EXPOSURE IN A VIRTUAL TEST ENVIRONMENT AND TRAINING OF THE MACHINE LEARNING ALGORITHM

In order to train the first machine learning algorithm, i.e. the machine learning algorithm that is used to perform run-time evaluation the candidate states of the vehicle as disclosed herein, it is proposed to utilize the output from a simulation system that is configured to run a probabilistic reliability method on the same type of input data (candidate states, predicted scenes and relevant events) in order to estimate a risk exposure of the ADS. The output of the simulation system can therefore effectively be used to form a training dataset together with the provided input. Since the simulation system utilizes the same type of input data, the details related to the input data, the various examples of data content, and processes for deriving the data will for the sake of brevity and conciseness not be repeated, but are considered to be readily understood by the skilled reader. Fig. 9 is a schematic block diagram representation of a simulation system 80 for estimating a risk exposure of a vehicle equipped with an automated driving system (ADS) in a virtual test environment.

Moving on, probabilistic reliability method that is used by the simulation system 80 may for example be a structural reliability method, such as e.g. a subset simulation (may be abbreviated as SuS or SS) method. Structural reliability methods may be understood as advanced stochastic methods for estimating probabilities of rare failure events, and was originally developed within the field of engineering mechanics.

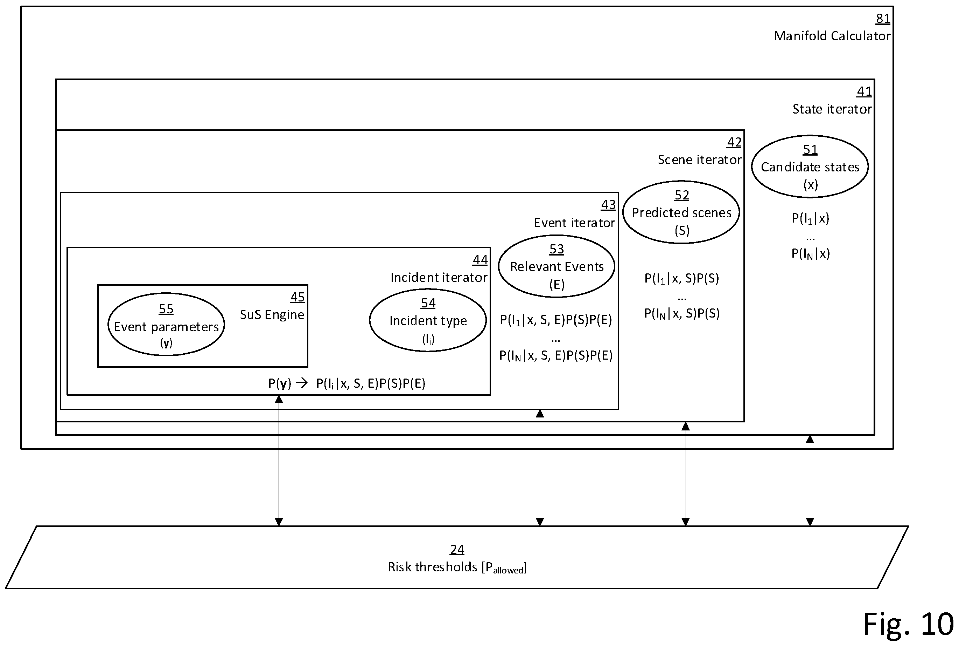

Due to their ability to efficiently transition scenario simulations towards the failure region in a high dimensional parameter space (which is the case for ADS simulations), the present inventors realized that it may be advantageously employed within software development and verification of ADSs. Furthermore, provided a simulation tool (software tool) and a multi-dimensional statistical model of the environment, structural reliability method simulations allows for efficiently estimating the probability of failure of an ADS. Since the failure rate estimations are based on statistical models that in turn are based on real traffic data, the failure rate estimations are highly relevant for the development and verification of ADS features. Further details related to the simulation system are given in reference to Fig. 10 below.

In short, the simulation system 80 is configured to obtain input data comprising at least one candidate state of the vehicle, where each candidate state comprises a set of candidate state parameters of the vehicle. The input data further comprises at least one predicted scene of the surrounding environment of the vehicle at each candidate state, where each predicted scene comprises a set of scene parameters of the surrounding environment of the vehicle and a scene probability metric of the scene occurring at an associated candidate state. Furthermore, the input data comprises at least one event for each predicted scene, where each event comprises an event probability metric of the event occurring in the predicted scene and a set of event parameters of each event. The input data further comprises a set of risk thresholds, wherein each risk threshold defines a predefined allowable frequency of occurrence of each of a plurality of predefined incident, where each incident defines a potential traffic incident that the vehicle could be exposed to during a predicted temporal development of each event.

Further, the simulation system 80 is configured to estimate a probability of each predefined incident occurring in the virtual test environment by running a probabilistic reliability method based on each set of candidate state parameters, each set of scene parameters, the scene probability metric for each set of scene parameters, the set of event parameters, and the event probability metric for each set of event parameters. Then, for each candidate state that is associated with a predefined incident occurring with a probability exceeding the predefined allowable frequency of occurrence for that incident, the control circuitry is configured to determine that candidate state as a high-risk state for the vehicle, and for each candidate state that is associated with a predefined incident occurring with a probability below the predefined allowable frequency of occurrence for that incident, the control circuitry is configured to determine that candidate state as an acceptable-risk state for the vehicle.

The simulation system may in the present context be referred to as a "manifold calculator" 81, and the output of the simulation system 80 may, similar as before, be in the form of a "failure manifold", which may be understood as an output indicative of a subset of the candidate states that are associated with elevated second order risks and should therefore be avoided by the ADS.

Moreover, Fig. 10 illustrates an example of how the predicted scenes and candidate states, serving as input to the simulation, may be produced. Similar as before with respect to the "manifold approximator" 31, the candidate states may be derived from candidate paths/trajectories as determined by a path planning or trajectory planning module 33 of the ADS. Thus, the generated candidate paths/trajectories may be provided as an input to a pre-processing module 32 that is configured to extract the relevant candidate states. Furthermore, the pre-processing step may include deriving the predicted scenes for the candidate states based on the perceived scenes of the ADS. In other words, one may utilize the ADS's perception system/module 6 in order to generate a perceived scene based on sensor data that has been obtained from real-life traffic scenarios. These perceived scenes may then be used to generate a predicted scene for a specific candidate state.

Moreover, as elaborated upon in the foregoing, the derivation of the predicted scenes based on the perceived scenes may be simplified by utilizing candidate paths/trajectories instead of relying on directly obtained candidate states. With the notion of analysing a candidate trajectory or candidate path instead of a single state, the time evolution of the predicted scene is also connected to the trajectory or path leading up to the candidate state. Conversely, when analysing the candidate states directly, all possible predicted scenes pertaining to any trajectory leading to the state should be considered, even though only one of those trajectories or paths may have been relevant from the ADS's perspective.

Accordingly, the candidate paths/trajectories may be used to derive the candidate states, and these are then used together to facilitate the generation of the predicted scenes from the perceived scenes, where the predicted scenes correspond to each (derived or otherwise obtained) candidate state. The predicted scenes possible at each candidate state may then be used to determine relevant simulation scenes. The relevant events may for example be retrieved from an appropriate database (e.g. derived from a QRN 24). The QRN 24 is also used to obtain the set of risk thresholds necessary for the formation of the failure manifold. Then, this dataset is used as an input to a manifold calculator 81 configured to generate the failure manifold. The manifold calculator 81 may, be configured to run a five layered simulation as depicted in Fig. 10.

As mentioned, the QRN may be understood as a database comprising a "budget" of frequencies allowed for a certain type of incident (e.g. ADS in conflict with a VRU, ADS crash into another vehicle at velocity $\epsilon$ [30, 60) km/h). Accordingly, there is a need for the simulation system to account for all of these incident types. Therefore, in order to find the probability of failure with respect to each of those incidents as defined by the QRN (or any other comparable source of information) one can, in accordance with some embodiments, run a subset simulation method as depicted in Fig. 10. The subset simulation allows for estimating the probability of failure of the ADS in various scenarios with different severity levels (e.g. collisions with minor injuries, moderate injuries, and fatal injuries).

Thus, Fig. 10 is a schematic block diagram representation of a simulation architecture suitable for realizing the manifold calculator 81. In more detail, Fig. 10 shows the different iteration levels 41-44 of the proposed simulation system 81. In each level the relevant parameters are iterated, and the derived probabilities are summed up through the law of total probability. The probabilities obtained at each level of iteration 41-44 are compared to the level in the QRN 24. If a violation is found that specific iteration can be stopped as a failure state (high risk state) has been identified.

In the innermost level (incident iterator 44) of the simulation architecture depicted in Fig. 10, handles the search across the parameters of the simulated/analysed event and the given predicted scene - i.e. the parameter space $\vec{y}$ (denoted as **y** in Fig. 10). Each such search, results in an estimation of the probability of failure in relation to defined incident type $I_i$. The second and third iteration levels - i.e. the iterations pertaining to the predicted scene (scene iterator 42) and the events (event iterator 43), respectively - are preferably iterated in such a way that the configuration most likely to produce a violation of the thresholds ($P_{allowed}$) defined in the QRN 24 are considered first. This may for example be achieved by considering events associated with incidents that have a relatively low allowable frequency of occurrence ($P_{allowed}$) as defined in the QRN 24. Furthermore, if the probabilities computed at any level, i.e. the output of any iterator 41-44, is found to violate the allowable frequency of occurrence ($P_{allowed}$) as defined in the QRN 24, the simulation for that particular iteration level 41-44 can be stopped as a failure state (i.e. high-risk state) has been identified. In the architecture depicted in Fig. 10, it is assumed that the scenes are independent from the unknown event that is happening, i.e. $P(E, S) = P(E)P(S)$.

In order to further elucidate the simulation architecture 81, an illustrative example of a simulated scene is depicted in Fig. 4d. More specifically, Fig. 4d illustrates a specific predicted scene for the obtained or otherwise derived candidate state 21, with one specific instance of the state of the external vehicle 2 (dynamic external object) having a predicted geographical position indicated by the broken-line vehicle 92. The candidate state 21 is indicated by the rightmost patterned vehicle. Moreover, in the depicted example, the event is the appearance of a non-perceived external object, here in the form of a moose 91, appearing from the previously occluded area 52.

The simulation system 81 has arrived at a specific point in the iteration across candidate states of the vehicle (i.e. the candidate state 21), and a specific predicted scene where the trailing vehicle 2 is predicted to be in a state denoted by the broken-line vehicle 92. Furthermore, the predicted scene including a set of scene parameters may further comprise a predicted speed of the external vehicle 2, a predicted heading of the external vehicle 2, as well as other scene parameters as discussed in the foregoing. Further, an event in the form of a moose 91 running out from the occluded area 52 behind the stationary vehicle 3 is considered in the simulated example. Thus, the system 81 will iterate across the incident types $I_1$ - $I_N$ (N being a positive integer $\geq$ 1) and subsequently search the parameter space $\vec{y}$, here including the potential actions of the external vehicle 2, the potential actions of the stationary vehicle 3 (which may start, but perhaps with a low probability of doing so), and the potential actions of the moose 91. The sub-set simulation across $\vec{y}$ will result in an estimate of the probability of failure for the specific incident $I_i$ that is considered in each iteration. An example of the output from the simulation is provided in table 1 below.

Table 1: Example of simulation output for a number of different incident types in relation to the scenario illustrated in Fig. 4d.

| Incident type | Probability of failure [estimated] $P(I_i\|x, S, E)P(S)P(E)$ | QRN, $P_{allowed}(I_i)$ |
|---|---|---|
| $I_1$= collision with moose [v > 70 km/h] | $10^{-14}h^{-1}$ | $10^{-11}\ h^{-1}$ |
| **$I_2$ = collision with moose [v $\epsilon$ [30, 70) km/h]** | **$10^{-7}\ h^{-1}$** | **$10^{-8}\ h^{-1}$** |
| ... | ... | |
| $I_k$ = collision with car [v $\epsilon$ [30, 70) km/h] | $10^{-9}\ h^{-1}$ | $10^{-6}\ h^{-1}$ |
| ... | | |

(continued)

| Incident type | Probability of failure [estimated] $P(I_i|x, S, E)P(S)P(E)$ | QRN, $P_{allowed}(I_i)$ |
|---|---|---|
| $I_m$ = near-collision with car distance at stand-still < 20 cm | $10^{-7}$ $h^{-1}$ | $10^{-4}$ $h^{-1}$ |
| .... | ... | ... |

Accordingly, Table 1 indicates the probability of failure of the ADS from the subset simulation corresponding to the realization of the scenario depicted in Fig. 4d, and accordingly the risk exposure of the vehicle for that scenario. It should be noted that the probability of failure of the ADS pertaining to the incident, candidate state, predicted scene and event $P(I_i|x, S, E)$ is here multiplied by the probabilities of the predicted scene $P(S)$ and event $P(E)$ (i.e. probability of the scene occurring and the probability of the event occurring) in order to be able to directly compare to the allowable frequency of occurrence defined by the QRN ($P_{allowed}(I_i)$). In the example shown in Table 1, the estimated probability of failure for the second incident type ($I_2$) is estimated to be at $10^{-7}$ $h^{-1}$, and this is found to violate the threshold of allowable frequency of occurrence for that incident type ($10^{-8}$ $h^{-1}$). Thus, in some embodiments, the iteration for that candidate state could stop as the analysed candidate state 21 is a state with a too high second order risk. However, for the sake of the example, and to further clarify the simulation architecture, some additional rows of the table have been populated.

In order to increase the computational efficiency of the simulation, one can order the set of incidents for iteration by dividing the allowed level as defined by the QRN with the probabilities of the event and the predicted scene in ascending order with the lowest number first. In other words, order the incidents by $\frac{P_{allowed}(i_i)}{P(S)P(E)}$. Thereby, one increases the chances of finding a failed incident early in the simulation effectively reducing the need for iterating across all possible incidents for each event in each predicted scene of each candidate state.

Further, in order to obtain a "final" estimate of the risk exposure of the ADS-equipped vehicle, and in particular of the second order risk for each candidate state, one may add the contributions from all event and predicted scenes for each incident. This may be performed based on the law of total probabilities, i.e. to get

$$P(I_i|x, S) = \sum_{j\in\mathbb{N}_E} P\big((I_i|x, S, E_j)P(E_j)$$, where $\mathbb{N}_E$ collects all relevant events.

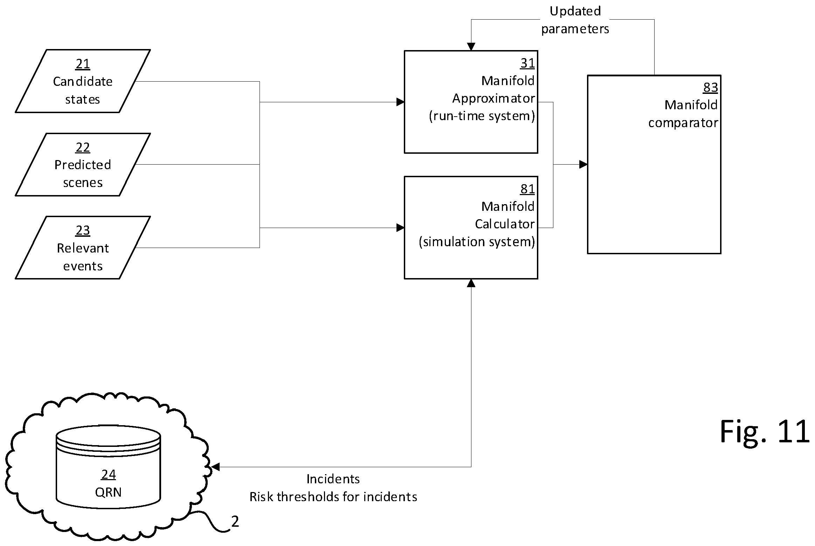

Moving on, the first machine learning algorithm making up the manifold approximator 31, may in accordance with some embodiments, be configured/trained by off-line training in comparison to the above-discussed simulation system. The training procedure is schematically depicted in Fig. 11, which is a schematic block diagram representation of a system for training the first machine learning algorithm 31. The training data used as input are the candidate states, the associated predicted scenes and the set of relevant events. These are then consumed by the first machine learning algorithm 31 and also processed through the simulation executed by the manifold calculator 81. The outputs of these two are then compared in order to construct a cost function with which the first machine learning algorithm is updated. The cost function calculation may be performed by a suitable module 83 as known in the art. However, as the skilled person realizes other training schemes are analogously applicable, such as supervised learning, where the output of the manifold calculator 81 forms the supervisory signal (i.e. desired output).

In reference to the above-mentioned anomaly detection and the determination of the run-time estimation of the confidence level of the first machine learning algorithm's output, the stored input data associated with situation/scenario where the confidence level of the first machine learning algorithm was below the threshold can efficiently be used to train the first machine learning algorithm in the setup depicted in Fig. 11.

Generally speaking, a computer-accessible medium may include any tangible or non-transitory storage media or memory media such as electronic, magnetic, or optical media-e.g., disk or CD/DVD-ROM coupled to computer system via bus. The terms "tangible" and "non-transitory," as used herein, are intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer-readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link.

The processor(s) 11 (associated with the processing system 10) may be or include any number of hardware components for conducting data or signal processing or for executing computer code stored in memory 12. The processing system 10 has an associated memory 12, and the memory 12 may be one or more devices for storing data and/or computer code for completing or facilitating the various methods described in the present description. The memory may include volatile memory or non-volatile memory. The memory 12 may include database components, object code components, script components, or any other type of information structure for supporting the various activities of the present description. According to an exemplary embodiment, any distributed or local memory device may be utilized with the systems and methods of this description. According to an exemplary embodiment the memory 12 is communicably connected to the processor 11 (e.g., via a circuit or any other wired, wireless, or network connection) and includes computer code for executing one or more processes described herein.

It should be noted that the word "comprising" does not exclude the presence of other elements or steps than those listed and the words "a" or "an" preceding an element do not exclude the presence of a plurality of such elements. It should further be noted that any reference signs do not limit the scope of the claims, that the invention may be at least in part implemented by means of both hardware and software, and that several "means" or "units" may be represented by the same item of hardware. It will also be understood that, although the term first, second, etc. may be used herein to describe various elements, these elements should not be limited by these terms. These terms are only used to distinguish one element from another. For example, a first function could be termed a second function, and, similarly, a second function could be termed a first function.

The first function and the second function are both functions, but they are not the same function.

Although the figures may show a specific order of method steps, the order of the steps may differ from what is depicted. In addition, two or more steps may be performed concurrently or with partial concurrence. Such variation will depend on the software and hardware systems chosen and on designer choice. The scope is defined by the claims.

Likewise, software implementations could be accomplished with standard programming techniques with rule-based logic and other logic to accomplish the various connection steps, processing steps, comparison steps and decision steps. The above mentioned and described embodiments are only given as examples and should not be limiting to the present invention. Other solutions, uses, objectives, and functions within the scope of the invention as claimed in the below described patent claims should be apparent for the person skilled in the art.

**Claims**

**1.** A method (S100) for run-time estimation of risk exposure of an ADS-equipped vehicle, the method comprising:

> obtaining (S101), by one or more processors of the vehicle, input data comprising:

>> at least one candidate state of the vehicle, wherein each candidate state comprises a set of candidate state parameters of the vehicle,
>> at least one predicted scene of the surrounding environment of the vehicle at each candidate state, wherein each predicted scene comprises a set of scene parameters of the surrounding environment of the vehicle and a scene probability metric of the scene occurring at an associated candidate state,
>> at least one event for each predicted scene, wherein each event comprises an event probability metric of the event occurring in the predicted scene and a set of event parameters of each event;

> processing (S102), by one or more processors of the vehicle, the obtained input data using a trained machine learning algorithm configured to evaluate the at least one candidate state, by:

>> for each candidate state that is associated with at least one predefined incident occurring with a probability exceeding a predefined allowable frequency of occurrence for that incident during a predicted temporal development of each event, generating (S104), by one or more processors of the vehicle, an output indicating that candidate state as a high-risk state for the vehicle; and
>> for each candidate state that is associated with at least one predefined incident occurring with a probability below the predefined allowable frequency of occurrence for that incident during a predicted temporal development of each event, generating (S105), by one or more processors of the vehicle, an output indicating that candidate state as an acceptable-risk state for the vehicle;

> determining (S107), by one or more processors of the vehicle, a path to be executed by the vehicle based on the evaluated at least one candidate state.

**2.** The method (S100) according to claim 1, wherein the set of candidate state parameters of the vehicle comprises at least one of a geographical position of the vehicle, a heading of the vehicle, a set of vehicle state parameters, an ADS configuration of the vehicle, an actuation capability of the vehicle, vehicle dimensions, and a vehicle weight.

**3.** The method (S100) according to claim 1 or 2, further comprising:

obtaining, by one or more processors of the vehicle, at least one candidate path for the vehicle;
wherein the step of obtaining (S101) input data comprising the at least one candidate state of the vehicle comprises:
deriving, by one or more processors of the vehicle, the at least one candidate state based on the obtained at least one candidate path;
wherein the step of determining (S107) the path to be executed by the vehicle comprises:
updating or rejecting, by one or more processors of the vehicle, the obtained at least one candidate path.

**4.** The method (S100) according to claim 3, wherein the step of determining (S107) the path to be executed by the vehicle comprises:
rejecting, by one or more processors of the vehicle, any candidate path comprising a candidate state that is determined as a high-risk state for the vehicle.

**5.** The method (S100) according to any one of claims 3-4, wherein the step of determining (S107) the path to be executed by the vehicle comprises:
for any candidate path associated with a candidate state that is determined as an acceptable-risk state for the vehicle, updating, by one or more processors of the vehicle, that candidate path to a less conservative path based on a set of quality criteria.

**6.** The method (S100) according to any one of claims 1-5, wherein the trained machine learning algorithm is a first trained machine learning algorithm, the method further comprising:

prior to processing the obtained input data using the first trained machine learning algorithm, evaluating (S113), by one or more processors of the vehicle, the obtained input data using a second trained machine learning algorithm in order to determine an operational validity of the first trained machine learning algorithm for the obtained input data;
wherein the second trained machine learning algorithm is trained with the same dataset as the first trained machine learning algorithm, and wherein the second trained machine learning algorithm is configured to generate an output indicative of a level of confidence of an output of the first trained machine learning algorithm for a given set of input data;
wherein the steps of processing (S102) the input data using the first trained machine learning algorithm and determining (S107) the candidate path to be executed by the vehicle are only performed if the level of confidence of the output of the first trained machine learning algorithm for the obtained input data is above a threshold; and
if the level of confidence of the output of the first trained machine learning algorithm for the obtained input data is below the threshold, the method (S100) further comprises storing (S114) the obtained input data.

**7.** The method (S100) according to claim 6, wherein the second trained machine learning algorithm is an autoencoder and wherein the output indicative of the level of confidence of the output of the first trained machine learning algorithm is a reconstruction error.

**8.** The method (S100) according to any one of claims 1-7, wherein the set of scene parameters comprises at least one of:

a predicted location of free-space areas in the surrounding environment of the vehicle and an uncertainty estimation for the predicted location of free-space areas;
a predicted location of static external objects in the surrounding environment of the vehicle and an uncertainty estimation for the predicted location of the static external objects;
a predicted location of dynamic external objects in the surrounding environment of the vehicle and an uncertainty estimation for the predicted location of the dynamic external objects;
a predicted heading of the dynamic external objects in the surrounding environment of the vehicle and an uncertainty estimation for the predicted heading of the dynamic external objects;
a set of predicted dynamical state parameters of the dynamic external objects in the surrounding environment of the vehicle and an uncertainty estimation for each predicted dynamical state parameter of the set of predicted dynamical state parameters of the dynamic external objects; and

a set of environmental conditions in the surrounding environment of the vehicle and an uncertainty estimation for each environmental condition of the set of environmental conditions in the surrounding environment of the vehicle.

9. The method (S100) according to any one of claims 1-8, wherein the set of event parameters comprises at least one of:

a perturbation of one or more scene parameters of the set of scene parameters, an uncertainty estimation for the perturbed one or more scene parameter; and

a set of object parameters of a non-perceived external object, the set of object parameters including a location of the non-perceived external object, a heading of the non-perceived external object, and a speed of the non-perceived external object.

10. The method (S100) according to any one of claims 1-9, further comprising:

transmitting (S108), by one or more processors of the vehicle, the determined path for execution to a vehicle control system.

11. A computer-readable storage medium storing one or more programs configured to be executed by one or more processors of an in-vehicle processing system, the one or more programs comprising instructions for performing the method (S100) according to any one of the preceding claims.

12. An in-vehicle processing system (10) for run-time estimation of risk exposure of an ADS equipped vehicle, comprising control circuitry (11) configured to:

obtain input data comprising:

at least one candidate state (21) of the vehicle, wherein each candidate state comprises a set of candidate state parameters of a vehicle (1),

at least one predicted scene (22) of the surrounding environment of the vehicle (1) at each candidate state, wherein each predicted scene comprises a set of scene parameters of the surrounding environment of the vehicle (1) and a scene probability metric of the scene occurring at an associated candidate state,

at least one event (23) for each predicted scene, wherein each event comprises an event probability metric of the event occurring in the predicted scene and a set of event parameters of each event;

process the obtained input data using a trained machine learning algorithm (31) configured to evaluate the at least one candidate state by:

for each candidate state that is associated with at least one predefined incident occurring with a probability exceeding a predefined allowable frequency of occurrence for that incident during a predicted temporal development of each event, generating an output indicating that candidate state as a high-risk state for the vehicle (1); and

for each candidate state that is associated with at least one predefined incident occurring with a probability below the predefined allowable frequency of occurrence for that incident during a predicted temporal development of each event, generating an output indicating that candidate state as an acceptable-risk state for the vehicle;

determine a path to be executed by the vehicle (1) based on the evaluated at least one candidate state.

13. The in-vehicle processing system (10) according to claim 12, wherein the trained machine learning algorithm (31) is a first trained machine learning algorithm (31), the control circuitry (11) being further configured to:

prior to processing the obtained input data using the first trained machine learning algorithm, evaluate the obtained input data using a second trained machine learning algorithm in order to determine an operational validity of the first trained machine learning algorithm (31) for the obtained input data;

wherein the second trained machine learning algorithm is trained with the same dataset as the first trained machine learning algorithm, and wherein the second trained machine learning algorithm is configured to generate an output indicative of a level of confidence of an output of the first trained machine learning algorithm (31) for a given set of input data;

wherein the steps of processing the input data using the first trained machine learning algorithm (31) and determining the candidate path to be executed by the vehicle (1) are only performed if the level of confidence of the output of the first trained machine learning algorithm (31) for the obtained input data is above a threshold; and

if the level of confidence of the output of the first trained machine learning algorithm (31) for the obtained input data is below the threshold, the control circuitry (11) is configured to storing the obtained input data.

**14.** The in-vehicle processing system (10) according to claim 13, wherein the second trained machine learning algorithm is an autoencoder and wherein the output indicative of the level of confidence of the output of the first trained machine learning algorithm (31) is a reconstruction error.

**15.** A vehicle (1) comprising:

a perception system (6) comprising one or more sensors (6a, 6b, 6c) configured to monitor a surrounding environment of the vehicle;
an Automated Driving System (ADS) configured to generate and execute candidate paths;
an in-vehicle processing system (10) according to any one of claims 11-14.

**Patentansprüche**

**1.** Verfahren (S100) zur Laufzeitschätzung einer Risikoexposition eines mit ADS ausgerüsteten Fahrzeugs, wobei das Verfahren Folgendes umfasst:

Erhalten (S101), durch einen oder mehrere Prozessoren des Fahrzeugs, von Eingabedaten, die Folgendes umfassen:

mindestens einen Kandidatenstatus des Fahrzeugs, wobei jeder Kandidatenstatus einen Satz von Kandidatenstatusparametern des Fahrzeugs umfasst,
mindestens eine prognostizierte Szene der Umgebung des Fahrzeugs bei jedem Kandidatenstatus, wobei jede prognostizierte Szene einen Satz von Szenenparametern der Umgebung des Fahrzeugs und eine Szenenwahrscheinlichkeitsmetrik für ein Auftreten der Szene bei einem verknüpften Kandidatenstatus umfasst,
mindestens ein Ereignis für jede prognostizierte Szene, wobei jedes Ereignis eine Ereigniswahrscheinlichkeitsmetrik für ein Auftreten des Ereignisses in der prognostizierten Szene und einen Satz von Ereignisparametern von jedem Ereignis umfasst;
Verarbeiten (S102), durch einen oder mehrere Prozessoren des Fahrzeugs, der erhaltenen Eingabedaten unter Verwendung eines trainierten maschinellen Lernalgorithmus, der dazu konfiguriert ist, den mindestens einen Kandidatenstatus zu bewerten, durch:

für jeden Kandidatenstatus, der mit mindestens einem vordefinierten Vorkommnis verknüpft ist, das mit einer Wahrscheinlichkeit auftritt, die eine vordefinierte zulässige Häufigkeit des Auftretens für dieses Vorkommnis während einer prognostizierten zeitlichen Entwicklung jedes Ereignisses übersteigt, Erzeugen (S104), durch einen oder mehrere Prozessoren des Fahrzeugs, einer Ausgabe, die diesen Kandidatenstatus als einen Hochrisikostatus für das Fahrzeug angibt; und
für jeden Kandidatenstatus, der mit mindestens einem vordefinierten Vorkommnis verknüpft ist, das mit einer Wahrscheinlichkeit auftritt, die unter der vordefinierten zulässigen Häufigkeit des Auftretens für dieses Vorkommnis während einer prognostizierten zeitlichen Entwicklung jedes Ereignisses liegt, Erzeugen (S105), durch einen oder mehrere Prozessoren des Fahrzeugs, einer Ausgabe, die diesen Kandidatenstatus als einen Status mit akzeptablem Risiko für das Fahrzeug angibt;
Bestimmen (S107), durch einen oder mehrere Prozessoren des Fahrzeugs, eines von dem Fahrzeug auszuführenden Pfades basierend auf dem bewerteten mindestens einen Kandidatenstatus.

**2.** Verfahren (S100) nach Anspruch 1, wobei der Satz von Kandidatenstatusparametern des Fahrzeugs mindestens eines von einer geografischen Position des Fahrzeugs, einem Kurs des Fahrzeugs, einem Satz von Fahrzeugstatusparametern, einer ADS-Konfiguration des Fahrzeugs, einer Betätigungsfähigkeit des Fahrzeugs, Fahrzeugabmessungen und einem Fahrzeuggewicht umfasst.

3. Verfahren (S100) nach Anspruch 1 oder 2, ferner umfassend:

Erhalten, durch einen oder mehrere Prozessoren des Fahrzeugs, von mindestens einem Kandidatenpfad für das Fahrzeug;
wobei der Schritt des Erhaltens (S101) von Eingabedaten, die den mindestens einen Kandidatenstatus des Fahrzeugs umfassen, Folgendes umfasst:

Ableiten, durch einen oder mehrere Prozessoren des Fahrzeugs, des mindestens einen Kandidatenstatus basierend auf dem erhaltenen mindestens einen Kandidatenpfad;
wobei der Schritt des Bestimmens (S107) des von dem Fahrzeug auszuführenden Pfades Folgendes umfasst:
Aktualisieren oder Verwerfen, durch einen oder mehrere Prozessoren des Fahrzeugs, des erhaltenen mindestens einen Kandidatenpfades.

4. Verfahren (S100) nach Anspruch 3, wobei der Schritt des Bestimmens (S107) des von dem Fahrzeug auszuführenden Pfades Folgendes umfasst:
Verwerfen, durch einen oder mehrere Prozessoren des Fahrzeugs, jedes Kandidatenpfades, der einen als Hochrisikostatus für das Fahrzeug bestimmten Kandidatenstatus umfasst.

5. Verfahren (S100) nach einem der Ansprüche 3 bis 4, wobei der Schritt des Bestimmens (S107) des von dem Fahrzeug auszuführenden Pfades Folgendes umfasst:
für jeden Kandidatenpfad, der mit einem als ein Status mit akzeptablem Risiko für das Fahrzeug bestimmten Kandidatenstatus verknüpft ist, Aktualisieren, durch einen oder mehrere Prozessoren des Fahrzeugs, dieses Kandidatenpfads auf einen weniger konservativen Pfad basierend auf einem Satz von Qualitätskriterien.

6. Verfahren (S100) nach einem der Ansprüche 1 bis 5, wobei der trainierte maschinelle Lernalgorithmus ein erster trainierter maschineller Lernalgorithmus ist, wobei das Verfahren ferner Folgendes umfasst:

vor dem Verarbeiten der erhaltenen Eingabedaten unter Verwendung des ersten trainierten maschinellen Lernalgorithmus, Bewerten (S113), durch einen oder mehrere Prozessoren des Fahrzeugs, der erhaltenen Eingabedaten unter Verwendung eines zweiten trainierten maschinellen Lernalgorithmus, um eine Betriebsgültigkeit des ersten trainierten maschinellen Lernalgorithmus für die erhaltenen Eingabedaten zu bestimmen;
wobei der zweite trainierte maschinelle Lernalgorithmus mit dem gleichen Datensatz wie der erste trainierte maschinelle Lernalgorithmus trainiert wird, und wobei der zweite trainierte maschinelle Lernalgorithmus dazu konfiguriert ist, eine Ausgabe zu erzeugen, die ein Vertrauensniveau einer Ausgabe des ersten trainierten maschinellen Lernalgorithmus für einen gegebenen Satz von Eingabedaten angibt;
wobei die Schritte des Verarbeitens (S102) der Eingabedaten unter Verwendung des ersten trainierten maschinellen Lernalgorithmus und des Bestimmens (S107) des von dem Fahrzeug auszuführenden Kandidatenpfades nur dann durchgeführt werden, wenn das Vertrauensniveau der Ausgabe des ersten trainierten maschinellen Lernalgorithmus für die erhaltenen Eingabedaten über einem Schwellenwert liegt; und
wenn das Vertrauensniveau der Ausgabe des ersten trainierten maschinellen Lernalgorithmus für die erhaltenen Eingabedaten unter dem Schwellenwert liegt, umfasst das Verfahren (S100) ferner Speichern (S114) der erhaltenen Eingabedaten.

7. Verfahren (S100) nach Anspruch 6, wobei der zweite trainierte maschinelle Lernalgorithmus ein Autoencoder ist und wobei die Ausgabe, die das Vertrauensniveau der Ausgabe des ersten trainierten maschinellen Lernalgorithmus angibt, ein Rekonstruktionsfehler ist.

8. Verfahren (S100) nach einem der Ansprüche 1 bis 7, wobei der Satz von Szenenparametern mindestens eines von Folgendem umfasst:

eine prognostizierte Position von Freiraumbereichen in der Umgebung des Fahrzeugs und eine Unsicherheitsabschätzung für die prognostizierte Position von Freiraumbereichen;
eine prognostizierte Position von statischen externen Objekten in der Umgebung des Fahrzeugs und eine Unsicherheitsabschätzung für die prognostizierte Position der statischen externen Objekte;
eine prognostizierte Position von dynamischen externen Objekten in der Umgebung des Fahrzeugs und eine Unsicherheitsabschätzung für die prognostizierte Position der dynamischen externen Objekte;
einen prognostizierten Kurs der dynamischen externen Objekte in der Umgebung des Fahrzeugs und eine Unsicherheitsabschätzung für den prognostizierten Kurs der dynamischen externen Objekte;
einen Satz prognostizierter dynamischer Statusparameter der dynamischen externen Objekte in der Umgebung des Fahrzeugs und eine Unsicherheitsabschätzung für jeden prognostizierten dynamischen Statusparameter des Satzes prognostizierter dynamischer Statusparameter der dynamischen externen Objekte; und einen Satz von Umweltbedingungen in der Umgebung des Fahrzeugs und eine Unsicherheitsabschätzung für jede Umweltbedingung des Satzes von Umweltbedingungen in der Umgebung des Fahrzeugs.

9. Verfahren (S100) nach einem der Ansprüche 1 bis 8, wobei der Satz von Ereignisparametern mindestens eines von Folgendem umfasst:

eine Störung eines oder mehrerer Szenenparameter des Satzes von Szenenparametern, eine Unsicherheitsabschätzung für den einen oder die mehreren gestörten Szenenparameter; und einen Satz von Objektparametern eines nicht wahrgenommenen externen Objekts, wobei der Satz von Objektparametern eine Position des nicht wahrgenommenen externen Objekts, einen Kurs des nicht wahrgenommenen externen Objekts und eine Geschwindigkeit des nicht wahrgenommenen externen Objekts beinhaltet.

10. Verfahren (S100) nach einem der Ansprüche 1 bis 9, ferner umfassend:
Übertragen (S108), durch einen oder mehrere Prozessoren des Fahrzeugs, des bestimmten Pfades zur Ausführung an ein Fahrzeugsteuerungssystem.

11. Computerlesbares Speichermedium, das ein oder mehrere Programme speichert, die dazu konfiguriert sind, von einem oder mehreren Prozessoren eines fahrzeuginternen Verarbeitungssystems ausgeführt zu werden, wobei das eine oder die mehreren Programme Anweisungen zum Durchführen des Verfahrens (S100) nach einem der vorstehenden Ansprüche umfassen.

12. Fahrzeuginternes Verarbeitungssystem (10) zur Laufzeitschätzung der Risikoexposition eines mit ADS ausgerüsteten Fahrzeugs, umfassend eine Steuerschaltung (11), die konfiguriert ist zum:
Erhalten von Eingabedaten, umfassend:

mindestens einen Kandidatenstatus (21) des Fahrzeugs, wobei jeder Kandidatenstatus einen Satz von Kandidatenstatusparametern eines Fahrzeugs (1) umfasst,
mindestens eine prognostizierte Szene (22) der Umgebung des Fahrzeugs (1) bei jedem Kandidatenstatus, wobei jede prognostizierte Szene einen Satz von Szenenparametern der Umgebung des Fahrzeugs (1) und eine Szenenwahrscheinlichkeitsmetrik für ein Auftreten der Szene bei einem verknüpften Kandidatenstatus umfasst,
mindestens ein Ereignis (23) für jede prognostizierte Szene, wobei jedes Ereignis eine Ereigniswahrscheinlichkeitsmetrik für ein Auftreten des Ereignisses in der prognostizierten Szene und einen Satz von Ereignisparametern von jedem Ereignis umfasst;
Verarbeiten der erhaltenen Eingabedaten unter Verwendung eines trainierten maschinellen Lernalgorithmus (31), der dazu konfiguriert ist, den mindestens einen Kandidatenstatus zu bewerten, durch:

für jeden Kandidatenstatus, der mit mindestens einem vordefinierten Vorkommnis verknüpft ist, das mit einer Wahrscheinlichkeit auftritt, die eine vordefinierte zulässige Häufigkeit des Auftretens für dieses Vorkommnis während einer prognostizierten zeitlichen Entwicklung jedes Ereignisses übersteigt, Erzeugen einer Ausgabe, die diesen Kandidatenstatus als einen Hochrisikostatus für das Fahrzeug (1) angibt; und
für jeden Kandidatenstatus, der mit mindestens einem vordefinierten Vorkommnis verknüpft ist, das mit einer Wahrscheinlichkeit auftritt, die unter der vordefinierten zulässigen Häufigkeit des Auftretens für dieses Vorkommnis während einer prognostizierten zeitlichen Entwicklung jedes Ereignisses liegt, Erzeugen einer Ausgabe, die diesen Kandidatenstatus als einen Status mit akzeptablem Risiko für das Fahrzeug angibt;
Bestimmen eines von dem Fahrzeug (1) auszuführenden Pfades basierend auf dem bewerteten mindestens einen Kandidatenstatus.

13. Fahrzeuginternes Verarbeitungssystem (10) nach Anspruch 12, wobei der trainierte maschinelle Lernalgorithmus (31) ein erster trainierter maschineller Lernalgorithmus (31) ist, wobei die Steuerschaltung (11) ferner konfiguriert ist zum:

vor dem Verarbeiten der erhaltenen Eingabedaten unter Verwendung des ersten trainierten maschinellen Lernalgorithmus, Bewerten der erhaltenen Eingabedaten unter Verwendung eines zweiten trainierten maschinellen Lernalgorithmus, um eine Betriebsgültigkeit des ersten trainierten maschinellen Lernalgorithmus (31) für die erhaltenen Eingabedaten zu bestimmen;

wobei der zweite trainierte maschinelle Lernalgorithmus mit dem gleichen Datensatz wie der erste trainierte maschinelle Lernalgorithmus trainiert wird, und wobei der zweite trainierte maschinelle Lernalgorithmus dazu konfiguriert ist,

eine Ausgabe zu erzeugen, die ein Vertrauensniveau einer Ausgabe des ersten trainierten maschinellen Lernalgorithmus (31) für einen gegebenen Satz von Eingabedaten angibt;

wobei die Schritte des Verarbeitens der Eingabedaten unter Verwendung des ersten trainierten maschinellen Lernalgorithmus (31) und des Bestimmens des von dem Fahrzeug (1) auszuführenden Kandidatenpfades nur dann durchgeführt werden, wenn das Vertrauensniveau der Ausgabe des ersten trainierten maschinellen Lernalgorithmus (31) für die erhaltenen Eingabedaten über einem Schwellenwert liegt; und

wobei, wenn das Vertrauensniveau der Ausgabe des ersten trainierten maschinellen Lernalgorithmus (31) für die erhaltenen Eingabedaten unter dem Schwellenwert liegt, die Steuerschaltung (11) dazu konfiguriert ist, die erhaltenen Eingabedaten zu speichern.

14. Fahrzeuginternes Verarbeitungssystem (10) nach Anspruch 13, wobei der zweite trainierte maschinelle Lernalgorithmus ein Autoencoder ist und wobei die Ausgabe, die das Vertrauensniveau der Ausgabe des ersten trainierten maschinellen Lernalgorithmus (31) anzeigt, ein Rekonstruktionsfehler ist.

15. Fahrzeug (1) umfassend:

ein Wahrnehmungssystem (6), umfassend einen oder mehrere Sensoren (6a, 6b, 6c), die dazu konfiguriert sind, eine Umgebung des Fahrzeugs zu überwachen;

ein automatisiertes Fahrsystem (ADS), das dazu konfiguriert ist, Kandidatenpfade zu erzeugen und auszuführen;

ein fahrzeuginternes Verarbeitungssystem (10) nach einem der Ansprüche 11 bis 14.

ein fahrzeuginternes Verarbeitungssystem (10) nach einem der Ansprüche 11 bis 14.

**Revendications**

1. Procédé (S100) d'estimation de temps d'exécution de l'exposition au risque d'un véhicule équipé d'un ADS, le procédé comprenant :

l'obtention (S101), par un ou plusieurs processeurs du véhicule, de données d'entrée comprenant :

au moins un état candidat du véhicule, dans lequel chaque état candidat comprend un ensemble de paramètres d'état candidat du véhicule,

au moins une scène prédite de l'environnement immédiat du véhicule à chaque état candidat, dans lequel chaque scène prédite comprend un ensemble de paramètres de scène de l'environnement immédiat du véhicule et une métrique de probabilité de scène de la scène se produisant dans un état candidat associé,

au moins un événement pour chaque scène prédite, dans lequel chaque événement comprend une métrique de probabilité d'événement de l'événement se produisant dans la scène prédite et un ensemble de paramètres d'événement de chaque événement ;

le traitement (S102), par un ou plusieurs processeurs du véhicule, des données d'entrée obtenues à l'aide d'un algorithme d'apprentissage automatique entraîné configuré pour évaluer l'au moins un état candidat par :

pour chaque état candidat qui est associé à au moins un incident prédéfini se produisant avec une probabilité dépassant une fréquence d'apparition admissible prédéfinie pour cet incident au cours d'un développement temporel prédit de chaque événement,

la génération (S104) par un ou plusieurs processeurs du véhicule, d'une sortie indiquant cet état candidat comme étant un état à haut risque pour le véhicule ; et

pour chaque état candidat qui est associé à au moins un incident prédéfini se produisant avec une probabilité inférieure à la fréquence d'apparition admissible prédéfinie pour cet incident au cours d'un développement temporel prédit de chaque événement,

la génération (S105) par un ou plusieurs processeurs du véhicule, d'une sortie indiquant cet état candidat comme étant un état de risque acceptable pour le véhicule ;

la détermination (S107), par un ou plusieurs processeurs du véhicule, d'un chemin à exécuter par le véhicule sur la base de l'au moins un état candidat évalué.

**2.** Procédé (S100) selon la revendication 1, dans lequel l'ensemble de paramètres d'état candidats du véhicule comprend au moins l'un parmi une position géographique du véhicule, un cap du véhicule, un ensemble de paramètres d'état de véhicule, une configuration ADS du véhicule, une capacité d'actionnement du véhicule, des dimensions de véhicule et un poids de véhicule.

**3.** Procédé (S100) selon la revendication 1 ou 2, comprenant également :

l'obtention, par un ou plusieurs processeurs du véhicule, d'au moins un chemin candidat pour le véhicule ;
dans lequel l'étape d'obtention (S101) de données d'entrée comprenant l'au moins un état candidat du véhicule comprend :

la dérivation, par un ou plusieurs processeurs du véhicule, de l'au moins un état candidat sur la base du chemin candidat obtenu ;
dans lequel l'étape de détermination (S107) du chemin à exécuter par le véhicule comprend :
la mise à jour ou le rejet, par un ou plusieurs processeurs du véhicule, de l'au moins un chemin candidat obtenu.

**4.** Procédé (S100) selon la revendication 3, dans lequel l'étape de détermination (S107) du chemin à exécuter par le véhicule comprend :
le rejet, par un ou plusieurs processeurs du véhicule, de tout chemin candidat comprenant un état candidat qui est déterminé comme étant un état à haut risque pour le véhicule.

**5.** Procédé (S100) selon l'une quelconque des revendications 3 et 4, dans lequel l'étape de détermination (S107) du chemin à exécuter par le véhicule comprend :
pour tout chemin candidat associé à un état candidat qui est déterminé comme étant un état de risque acceptable pour le véhicule, la mise à jour, par un ou plusieurs processeurs du véhicule, de ce chemin candidat vers un chemin moins conservateur sur la base d'un ensemble de critères de qualité.

**6.** Procédé (S100) selon l'une quelconque des revendications 1 à 5, dans lequel l'algorithme d'apprentissage automatique entraîné est un premier algorithme d'apprentissage automatique entraîné, le procédé comprenant également :

avant le traitement des données d'entrée obtenues à l'aide du premier algorithme d'apprentissage automatique entraîné, l'évaluation (S113), par un ou plusieurs processeurs du véhicule, des données d'entrée obtenues à l'aide d'un second algorithme d'apprentissage automatique entraîné afin de déterminer une validité opérationnelle du premier algorithme d'apprentissage automatique entraîné pour les données d'entrée obtenues ;
dans lequel le second algorithme d'apprentissage automatique entraîné est entraîné avec le même ensemble de données que le premier algorithme d'apprentissage automatique entraîné, et dans lequel le second algorithme d'apprentissage automatique entraîné est configuré pour générer une sortie indicative d'un niveau de confiance d'une sortie du premier algorithme d'apprentissage automatique entraîné pour un ensemble donné de données d'entrée ;
dans lequel les étapes de traitement (S102) des données d'entrée à l'aide du premier algorithme d'apprentissage automatique entraîné et de détermination (S107) du chemin candidat à exécuter par le véhicule sont exécutées uniquement si le niveau de confiance de la sortie du premier algorithme d'apprentissage automatique entraîné pour les données d'entrée obtenues est supérieur à un seuil ; et
si le niveau de confiance de la sortie du premier algorithme d'apprentissage automatique entraîné pour les données d'entrée obtenues est inférieur au seuil, le procédé (S100) comprend également le stockage (S114) des données d'entrée obtenues.

**7.** Procédé (S100) selon la revendication 6, dans lequel le second algorithme d'apprentissage automatique entraîné est un auto-encodeur et dans lequel la sortie indicative du niveau de confiance de la sortie du premier algorithme d'apprentissage automatique entraîné est une erreur de reconstruction.

**8.** Procédé (S100) selon l'une quelconque des revendications 1 à 7, dans lequel l'ensemble de paramètres de scène comprend au moins l'un parmi :

un emplacement prédit de zones d'espace libre dans l'environnement immédiat du véhicule et une estimation d'incertitude pour l'emplacement prédit de zones d'espace libre ;

un emplacement prédit d'objets externes statiques dans l'environnement immédiat du véhicule et une estimation d'incertitude pour l'emplacement prédit des objets externes statiques ;
un emplacement prédit d'objets externes dynamiques dans l'environnement immédiat du véhicule et une estimation d'incertitude pour l'emplacement prédit des objets externes dynamiques ;
un cap prédit des objets externes dynamiques dans l'environnement immédiat du véhicule et une estimation d'incertitude pour le cap prédit des objets externes dynamiques ;
un ensemble de paramètres d'état dynamique prédits des objets externes dynamiques dans l'environnement immédiat du véhicule et une estimation d'incertitude pour chaque paramètre d'état dynamique prédit de l'ensemble de paramètres d'état dynamique prédits des objets externes dynamiques ; et
un ensemble de conditions environnementales dans l'environnement immédiat du véhicule et une estimation d'incertitude pour chaque condition environnementale de l'ensemble de conditions environnementales dans l'environnement immédiat du véhicule.

9. Procédé (S100) selon l'une quelconque des revendications 1 à 8, dans lequel l'ensemble de paramètres d'événement comprend au moins l'un parmi :

une perturbation d'un ou de plusieurs paramètres de scène de l'ensemble de paramètres de scène, une estimation d'incertitude pour les un ou plusieurs paramètres de scène perturbés ; et
un ensemble de paramètres d'objet d'un objet externe non perçu, l'ensemble de paramètres d'objet comportant un emplacement de l'objet externe non perçu, un cap de l'objet externe non perçu et une vitesse de l'objet externe non perçu.

10. Procédé (S100) selon l'une quelconque des revendications 1 à 9, comprenant également :
la transmission (S108), par un ou plusieurs processeurs du véhicule, du chemin déterminé pour exécution à un système de commande de véhicule.

11. Support de stockage lisible par ordinateur stockant un ou plusieurs programmes configurés pour être exécutés par un ou plusieurs processeurs d'un système de traitement embarqué, les un ou plusieurs programmes comprenant des instructions pour exécuter le procédé (S100) selon l'une quelconque des revendications précédentes.

12. Système de traitement embarqué (10) pour l'estimation de temps d'exécution de l'exposition au risque d'un véhicule équipé d'un ADS, comprenant un circuit de commande (11) configuré pour :
obtenir des données d'entrée comprenant :

au moins un état candidat (21) du véhicule, dans lequel chaque état candidat comprend un ensemble de paramètres d'état candidat d'un véhicule (1),
au moins une scène prédite (22) de l'environnement immédiat du véhicule (1) à chaque état candidat, dans lequel chaque scène prédite comprend un ensemble de paramètres de scène de l'environnement immédiat du véhicule (1) et une métrique de probabilité de scène de la scène se produisant dans un état candidat associé,
au moins un événement (23) pour chaque scène prédite, dans lequel chaque événement comprend une métrique de probabilité d'événement de l'événement se produisant dans la scène prédite et un ensemble de paramètres d'événement de chaque événement ;
traiter les données d'entrée obtenues à l'aide d'un algorithme d'apprentissage automatique entraîné (31) configuré pour évaluer l'au moins un état candidat par :

pour chaque état candidat qui est associé à au moins un incident prédéfini se produisant avec une probabilité dépassant une fréquence d'apparition admissible prédéfinie pour cet incident au cours d'un développement temporel prédit de chaque événement, la génération d'une sortie indiquant cet état candidat comme étant un état à haut risque pour le véhicule (1) ; et
pour chaque état candidat qui est associé à au moins un incident prédéfini se produisant avec une probabilité inférieure à la fréquence d'apparition admissible prédéfinie pour cet incident au cours d'un développement temporel prédit de chaque événement, la génération d'une sortie indiquant cet état candidat comme étant un état de risque acceptable pour le véhicule ;
déterminer un chemin à exécuter par le véhicule (1) sur la base de l'au moins un état candidat évalué.

13. Système de traitement embarqué (10) selon la revendication 12, dans lequel l'algorithme d'apprentissage automatique entraîné (31) est un premier algorithme d'apprentissage automatique entraîné (31), le circuit de commande (11) étant également configuré pour :

avant le traitement des données d'entrée obtenues à l'aide du premier algorithme d'apprentissage automatique entraîné, évaluer les données d'entrée obtenues à l'aide d'un second algorithme d'apprentissage automatique entraîné afin de déterminer une validité opérationnelle du premier algorithme d'apprentissage automatique entraîné (31) pour les données d'entrée obtenues ;

dans lequel le second algorithme d'apprentissage automatique entraîné est entraîné avec le même ensemble de données que le premier algorithme d'apprentissage automatique entraîné, et dans lequel le second algorithme d'apprentissage automatique entraîné est configuré pour générer une sortie indicative d'un niveau de confiance d'une sortie du premier algorithme d'apprentissage automatique entraîné (31) pour un ensemble donné de données d'entrée ;

dans lequel les étapes de traitement des données d'entrée à l'aide du premier algorithme d'apprentissage automatique entraîné (31) et de détermination du chemin candidat à exécuter par le véhicule (1) sont exécutées uniquement si le niveau de confiance de la sortie du premier algorithme d'apprentissage automatique entraîné (31) pour les données d'entrée obtenues est supérieur à un seuil ; et

si le niveau de confiance de la sortie du premier algorithme d'apprentissage automatique entraîné (31) pour les données d'entrée obtenues est inférieur au seuil, le circuit de commande (11) est configuré pour stocker les données d'entrée obtenues.

14. Système de traitement embarqué (10) selon la revendication 13, dans lequel le second algorithme d'apprentissage automatique entraîné est un auto-encodeur et dans lequel la sortie indicative du niveau de confiance de la sortie du premier algorithme d'apprentissage automatique entraîné (31) est une erreur de reconstruction.

15. Véhicule (1) comprenant :

un système de perception (6) comprenant un ou plusieurs capteurs (6a, 6b, 6c) configurés pour surveiller un environnement immédiat du véhicule ;
un système de conduite automatisé (ADS) configuré pour générer et exécuter des chemins candidats ;
un système de traitement embarqué (10) selon l'une quelconque des revendications 11 à 14.

S100

| 21 |
| Candidate states |

| 22 |
| Predicted scenes |

| 23 |
| Relevant events |

**S101**
Obtain input data

**S102**
Processing the input data using first machine learning algorithm

**S104**
Determine high-risk states

**S105**
Determine acceptable-risk states

**S107**
Determine path for execution

**S108**
Transmit path for execution to vehicle control system

Fig. 1

120

123

121

122

Acceptable-risk states

High-risk states

S100

**S101**
Obtain input data

**S110**
Determine candidate states

**210**
Candidate paths

**S111**
Determine predicted scenes per candidate state

**220**
Perceived scene

**S112**
Deduce relevant events

**S113**
Evaluate input data by means of an auto-encoder

Reconstruction error above threshold?

YES

**S114**
Store input data

NO

**S102**
Estimate failure manifold

**S104**
Determine high-risk states

**S105**
Determine acceptable-risk states

**S107**
Determine path for execution

**S108**
Transmit path for execution to vehicle control system

Fig. 2

Fig. 3

Fig. 4a

Fig. 4b

Fig. 4c

Fig. 4d

Fig. 5

Fig. 6

Fig. 7

Fig. 8

Fig. 9

Fig. 10

83
Manifold comparator

Updated parameters

31
Manifold Approximator
(run-time system)

81
Manifold Calculator
(simulation system)

21
Candidate states

22
Predicted scenes

23
Relevant events

Incidents
Risk thresholds for incidents

2

24
QRN

Fig. 11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3940487 A1
- DE 102012009297 A

- EP 20196794